# EUROPEAN PATENT APPLICATION

(11) **EP 4 708 176 A1**
(43) Date of publication of application: **11.03.2026**
(21) Application number: 24842424.4
(22) Date of filing: 18.07.2024
(51) Int. Cl.: G06Q 30/018

(54) **ANTI-COUNTERFEITING IDENTIFICATION METHOD FOR FILTER ELEMENT, AND RELATED APPARATUS**

(30) Priority: 18.07.2023 CN 202310883978; 18.07.2023 CN 202310886129; 21.07.2023 CN 202310914731; 21.07.2023 CN 202310904442; 21.07.2023 CN 202310914724
(71) Applicant: Wuhu Midea Smart Kitchen Appliance Manufacturing Co., Ltd., Wuhu, Anhui 241000 (CN)
(72) Inventor: WU, Qijun, Wuhu, Anhui 241000 (CN); ZHANG, Lixiao, Wuhu, Anhui 241000 (CN); LI, Biao, Wuhu, Anhui 241000 (CN)
(74) Representative: RGTH
(86) International application number: PCT/CN2024/106196
(87) International publication number: WO 2025/016437

(57) **Abstract**

The present disclosure discloses an anti-counterfeiting identification method for a filter element and a related apparatus. The method includes: obtaining an anti-counterfeiting mark image of a to-be-identified filter element; and performing an anti-counterfeiting identification operation on the filter element based on the anti-counterfeiting mark image, to determine product authenticity information of the filter element. Through the above manner, the present disclosure can determine the authenticity of the filter element.

## Description

This application claims priorities to Chinese Patent Application No. 2023108839786, filed on July 18, 2023 and entitled "IDENTIFICATION METHOD FOR ANTI-COUNTERFEITING MARK OF FILTER ELEMENT AND RELATED APPARATUS", Chinese Patent Application No. 2023108861296, filed on July 18, 2023 and entitled "ANTI-COUNTERFEITING METHOD FOR FILTER ELEMENT AND RELATED APPARATUS", Chinese Patent Application No. 2023109044428, filed on July 21, 2023 and entitled "ANTI-COUNTERFEITING IDENTIFICATION METHOD AND APPARATUS FOR FILTER ELEMENT, WATER PURIFICATION DEVICE, AND ELECTRONIC DEVICE", Chinese Patent Application No. 2023109147246, filed on July 21, 2023 and entitled "ANTI-COUNTERFEITING IDENTIFICATION METHOD AND APPARATUS FOR FILTER ELEMENT AND WATER PURIFICATION DEVICE", and Chinese Patent Application No. 2023109147316, filed on July 21, 2023 and entitled "ANTI-COUNTERFEITING IDENTIFICATION METHOD AND APPARATUS FOR FILTER ELEMENT AND WATER PURIFICATION DEVICE", the entire disclosure of which are incorporated herein by reference.

### FIELD

The present disclosure relates to the technical field of water purification devices, and in particular, to an anti-counterfeiting identification method for a filter element and a related apparatus.

### BACKGROUND

A filter element is a key consumable of a water purification device and needs to be replaced regularly. However, there are often some counterfeit and shoddy filter elements on the market. These counterfeit filter elements infringe on the interests of manufacturers, and their quality is also not easily guaranteed, which affects the operation of the water purification device and users' health. Therefore, anti-counterfeiting identification of the filter element for the water purification device is of vital importance.

### SUMMARY

The present disclosure provides an anti-counterfeiting identification method for a filter element and a related apparatus, to solve a problem of performing anti-counterfeiting identification on a filter element of a water purification device.

To solve the above technical problem, the present disclosure provides an anti-counterfeiting identification method for a filter element. The method comprises: obtaining an anti-counterfeiting mark image of a to-be-identified filter element; and performing an anti-counterfeiting identification operation on the filter element based on the anti-counterfeiting mark image, to determine product authenticity information of the filter element.

In some embodiments, the performing the anti-counterfeiting identification operation on the filter element based on the anti-counterfeiting mark image, to determine the product authenticity information of the filter element comprises: obtaining a processing result of the anti-counterfeiting mark image; and determining the product authenticity information of the filter element based on the processing result. The processing result is an identification result obtained by identifying the anti-counterfeiting mark image or a comparison result obtained by comparing the anti-counterfeiting mark image with a template mark image.

In some embodiments, the processing result is an identification result obtained by identifying the anti-counterfeiting mark image, and the identification result comprises ciphertext data of an anti-counterfeiting mark in the anti-counterfeiting mark image.

In some embodiments, the determining the product authenticity information of the filter element based on the processing result comprises: decrypting the ciphertext data to obtain plaintext data corresponding to the anti-counterfeiting mark; determining whether the plaintext data conforms to a predetermined encoding rule, where the plaintext data is obtained by encoding production information of the filter element according to the predetermined encoding rule; and determining that the filter element is genuine in response to the plaintext data conforming to the predetermined encoding rule.

In some embodiments, the determining the product authenticity information of the filter element based on the processing result comprises: transmitting the ciphertext data to a server, wherein the server is capable of decrypting the ciphertext data to obtain the plaintext data corresponding to the anti-counterfeiting mark and obtaining association information corresponding to the plaintext data, the association information indicating whether the filter element is associated with an other water purification device, and determining the product authenticity information of the filter element based on the association information.

In some embodiments, the anti-counterfeiting identification method for a filter element further comprises: obtaining an auxiliary identification mark corresponding to the to-be-identified filter element.

In some embodiments, prior to the obtaining the processing result of the anti-counterfeiting mark image, the method further comprises: determining whether the auxiliary identification mark in a filter element image is the same as a target identification mark, where the filter element image comprises the auxiliary identification mark and an anti-counterfeiting mark; and in response to the auxiliary identification mark being the same as the target identification mark, executing the step of obtaining the processing result of the anti-counterfeiting mark image.

In some embodiments, the method further comprises, prior to the obtaining the processing result of the anti-counterfeiting mark image: dividing the anti-counterfeiting mark image into one or more image blocks based on a random-access memory space of a processor in a water purification device; and obtaining a compressed anti-counterfeiting mark image of the filter element based on compressed blocks respectively corresponding to the one or more image blocks. The compressed anti-counterfeiting mark image of the filter element is to be processed to obtain the processing result of the anti-counterfeiting mark image.

In some embodiments, the performing the anti-counterfeiting identification operation on the filter element based on the anti-counterfeiting mark image, to determine the product authenticity information of the filter element comprises: performing ternarization processing on the anti-counterfeiting mark image to obtain a ternarized image; and performing the anti-counterfeiting identification operation on the filter element based on a comparison result between a proportion of pixels with a median grayscale value in the ternarized image and a target proportion threshold, to determine the product authenticity information of the filter element.

In some embodiments, the performing the anti-counterfeiting identification operation on the filter element based on the comparison result between the proportion of pixels with the median grayscale value in the ternarized image and the target proportion threshold, to determine the product authenticity information of the filter element comprises: in response to the proportion of pixels with the median grayscale value in the ternarized image being greater than the target proportion threshold, re-obtaining a plurality of anti-counterfeiting mark images at a first time interval; respectively performing the ternarization processing on the plurality of anti-counterfeiting mark images to obtain a plurality of new ternarized images; and in response to the plurality of new ternarized images comprising at least one target ternarized image, determining the product authenticity information based on an anti-counterfeiting mark image corresponding to the target ternarized image. The proportion of pixels with the median grayscale value in the target ternarized image is smaller than or equal to the target proportion threshold.

In some embodiments, the method further comprises, subsequent to the determining the product authenticity information based on the anti-counterfeiting mark image corresponding to the target ternarized image: re-obtaining the anti-counterfeiting mark image at a second time interval to perform anti-counterfeiting identification on the filter element. The second time interval is greater than the first time interval.

In some embodiments, the performing the anti-counterfeiting identification operation on the filter element based on the comparison result between the proportion of pixels with the median grayscale value in the ternarized image and the target proportion threshold, to determine the product authenticity information of the filter element comprises: in response to the proportion of pixels with the median grayscale value in the ternarized image being smaller than or equal to the target proportion threshold, determining the product authenticity information based on the anti-counterfeiting mark image.

In some embodiments, the obtaining the anti-counterfeiting mark image of the to-be-identified filter element comprises: obtaining a filter element image, where the filter element image is obtained by photographing the to-be-identified filter element, the to-be-identified filter element comprising an anti-counterfeiting mark; and cropping the anti-counterfeiting mark image from the filter element image.

In some embodiments, the cropping the anti-counterfeiting mark image from the filter element image comprises: determining cropping coordinates based on a relative position between an image capture device and the to-be-identified filter element in a water purification device, where the image capture device is capable of photographing the to-be-identified filter element to obtain the filter element image; and cropping image data from the filter element image based on the cropping coordinates to obtain the anti-counterfeiting mark image.

In some embodiments, the cropping the anti-counterfeiting mark image from the filter element image comprises: obtaining a grayscale filter element image based on grayscale data of the filter element image; and cropping the anti-counterfeiting mark image from the grayscale filter element image.

In some embodiments, the cropping the anti-counterfeiting mark image from the filter element image comprises: performing image preprocessing on the filter element image to obtain a first target image, a difference degree between an anti-counterfeiting mark region and a background region in the first target image is greater than a difference degree between an anti-counterfeiting mark region and a background region in the filter element image; determining a target region in which the anti-counterfeiting mark is located in the first target image based on size information of the anti-counterfeiting mark; and cropping the filter element image based on the target region to obtain the anti-counterfeiting mark image.

In some embodiments, the anti-counterfeiting mark image is cropped from the grayscale filter element image; and the cropping the anti-counterfeiting mark image from the grayscale filter element image comprises: determining an anti-counterfeiting mark boundary in the grayscale filter element image based on a target grayscale threshold; and cropping a second filter element image based on the anti-counterfeiting mark boundary and the size information of the anti-counterfeiting mark to obtain the anti-counterfeiting mark image.

In some embodiments, the performing the anti-counterfeiting identification operation on the filter element based on the anti-counterfeiting mark image, to determine the product authenticity information of the filter element comprises: comparing the anti-counterfeiting mark image with a template mark image to determine the product authenticity information of the filter element.

In some embodiments, the comparing the anti-counterfeiting mark image with the template mark image to determine the product authenticity information of the filter element comprises: performing image segmentation processing based on grayscale information on the anti-counterfeiting mark image to obtain a first mark image; performing binarization processing and rotation processing on the first mark image to obtain a binarized image; performing image segmentation processing based on a mark size on the binarized image to obtain a plurality of first mark sub-images; respectively performing translation processing on the plurality of first mark sub-images to obtain a plurality of second mark sub-images corresponding to a second mark image; and comparing the second mark image with the template mark image to determine the product authenticity information.

To solve the above technical problem, the present disclosure provides another anti-counterfeiting identification method for a filter element. The method comprises: obtaining an anti-counterfeiting mark image of the filter element, where the anti-counterfeiting mark image of the filter element is obtained by a camera component on a water purification device photographing a to-be-identified filter element mounted in the water purification device; dividing the anti-counterfeiting mark image into one or more image blocks based on a random-access memory space of a processor in the water purification device; obtaining a compressed image corresponding to the anti-counterfeiting mark image based on compressed blocks respectively corresponding to the one or more image blocks; and identifying the compressed image to obtain an identification result indicating whether the to-be-identified filter element is counterfeit.

In some embodiments, the method further comprises, prior to the dividing the anti-counterfeiting mark image into the one or more image blocks based on the random-access memory space of the processor in the water purification device: determining cropping coordinates based on a relative position between the camera component and the to-be-identified filter element in the water purification device; and cropping image data from the image captured by the camera component based on the cropping coordinates to obtain the anti-counterfeiting mark image.

In some embodiments, the method further comprises, subsequent to the dividing the anti-counterfeiting mark image into the one or more image blocks based on the random-access memory space of the processor in the water purification device and prior to the obtaining the compressed image corresponding to the anti-counterfeiting mark image based on the compressed blocks respectively corresponding to the one or more image blocks: compressing the one or more image blocks to obtain the compressed blocks respectively corresponding to the one or more image blocks. The processor obtains the one or more image blocks from the camera component and compresses the one or more image blocks in parallel.

In some embodiments, the method further comprises, prior to the compressing the one or more image blocks to obtain the compressed blocks respectively corresponding to the one or more image blocks: sequentially obtaining and caching one image block from the camera component.

In some embodiments, the compressing the one or more image blocks to obtain the one or more compressed blocks respectively corresponding to the one or more image blocks comprises: when one image block is obtained and cached each time, executing the step of compressing a previously obtained and cached image block to obtain the compressed block corresponding to the previously obtained image block.

In some embodiments, the method further comprises, subsequent to the compressing the one or more image blocks to obtain the compressed blocks respectively corresponding to the one or more image blocks and prior to the obtaining the compressed image corresponding to the anti-counterfeiting mark image based on the compressed blocks respectively corresponding to the one or more image blocks: detecting whether the one or more image blocks are compressed; in response to the one or more image blocks being compressed, executing the step of obtaining the compressed image corresponding to the anti-counterfeiting mark image based on the compressed blocks respectively corresponding to the one or more image blocks; and in response to existence of an uncompressed image block, returning to the step of sequentially obtaining and caching one image block from the camera component.

In some embodiments, the detecting whether the one or more image blocks are compressed comprises: obtaining coordinate information of a latest compressed image block in the anti-counterfeiting mark image; and determining whether the one or more image block are compressed based on the coordinate information.

In some embodiments, the compressing the one or more image blocks to obtain the compressed blocks respectively corresponding to the one or more image blocks comprises: for each of the one or more image blocks, determining a binarization threshold based on a color space of the anti-counterfeiting mark image; performing binarization processing on each pixel in the image block based on the binarization threshold to obtain a data block; and compressing the data block to obtain a compressed block corresponding to the data block.

In some embodiments, the anti-counterfeiting mark image is a multi-channel image, and the binarization threshold comprises sub-thresholds respectively corresponding to each channel. The binarization processing is performed based on the binarization threshold.

In some embodiments, the performing the binarization processing on each pixel in the image block to obtain the data block comprises: for each pixel in the image block, binarizing the pixel into a first value or a second value based on a relationship between a pixel value of the pixel in each channel and a sub-threshold of the corresponding channel.

In some embodiments, the sub-threshold comprises an upper limit value or a lower limit value.

In some embodiments, the binarizing the pixel into the first value or the second value based on the relationship between the pixel value of the pixel in each channel and the sub-threshold of the corresponding channel comprises: binarizing the pixel into the first value in response to the pixel value of the pixel in each channel being greater than the upper limit value.

In some embodiments, the binarizing the pixel into the first value or the second value based on the relationship between the pixel value of the pixel in each channel and the sub-threshold of the corresponding channel comprises: binarizing the pixel into the second value in response to the pixel value of the pixel in each channel being smaller than the lower limit value.

In some embodiments, the anti-counterfeiting mark image is an RGB image.

In some embodiments, the determining the binarization threshold based on the color space of the anti-counterfeiting mark image comprises: obtaining a pixel extreme value of each channel in an RGB color space; and determining the binarization threshold based on the pixel extreme value and a predetermined error of each channel.

In some embodiments, the compressing the data block to obtain the compressed block corresponding to the data block comprises: dividing the data block into a plurality of sub-data blocks; for each of the plurality of sub-data blocks, weighting and averaging elements in the sub-data block to obtain compressed data corresponding to the sub-data block; and obtaining the compressed block using compressed data corresponding to the plurality of sub-data blocks.

To solve the above technical problem, the present disclosure provides another anti-counterfeiting identification method for a filter element. The method comprises: obtaining a filter element image, which may also be referred to as a filter element mark image, where the filter element image is obtained by a camera component on a water purification device photographing a to-be-identified filter element mounted in the water purification device; and obtaining a second identification result indicating whether the to-be-identified filter element is counterfeit based on a first identification result of a filter element anti-counterfeiting mark in the filter element image. The first identification result comprises ciphertext data of the filter element anti-counterfeiting mark.

In some embodiments, the method further comprises, prior to the obtaining the second identification result indicating whether the to-be-identified filter element is counterfeit based on the first identification result of the filter element anti-counterfeiting mark in the filter element image: determining whether an auxiliary identification mark in the filter element image is the same as a target identification mark; and in response to the auxiliary identification mark being the same as the target identification mark, executing the step of obtaining the second identification result indicating whether the to-be-identified filter element is counterfeit based on the first identification result of the filter element anti-counterfeiting mark in the filter element image.

In some embodiments, the determining whether the auxiliary identification mark in the filter element image is the same as the target identification mark comprises: determining whether a pixel value of each pixel in second image data of the auxiliary identification mark in the filter element image is within a predetermined range; converting the pixel value of each pixel into a grayscale value in response to the pixel value of each pixel being within the predetermined range; and determining whether the auxiliary identification mark is the same as the target identification mark based on a difference between the grayscale value and a standard grayscale value. The standard grayscale value is obtained by performing grayscale processing on image data of the target identification mark.

In some embodiments, the determining whether the auxiliary identification mark is the same as the target identification mark based on the difference between the grayscale value and the predetermined standard grayscale value comprises at least one of: determining that the auxiliary identification mark is the same as the target identification mark in response to the difference being within a predetermined difference range; and determining that the auxiliary identification mark is different from the target identification mark in response to the difference not being within the predetermined difference range.

In some embodiments, the obtaining the second identification result indicating whether the to-be-identified filter element is counterfeit based on the first identification result of the filter element anti-counterfeiting mark in the filter element image comprises: decrypting the ciphertext data to obtain plaintext data corresponding to the filter element anti-counterfeiting mark; determining whether the plaintext data conforms to a predetermined encoding rule, where the plaintext data is obtained by encoding production information of the filter element according to the predetermined encoding rule; and obtaining the second identification result based on the plaintext data in response to the plaintext data conforming to the predetermined encoding rule.

In some embodiments, the second identification result is determined by a server based on association information corresponding to the to-be-identified filter element. The association information is obtained based on the plaintext data corresponding to the filter element anti-counterfeiting mark and indicates whether the to-be-identified filter element is associated with another water purification device. The plaintext data is obtained by the server decrypting the ciphertext data received from the water purification device.

To solve the above technical problem, the present disclosure provides another anti-counterfeiting identification method for a filter element. The method comprises: obtaining a filter element image of a to-be-identified filter element, the filter element image comprising an anti-counterfeiting mark of the filter element; obtaining a grayscale filter element image based on grayscale data of the filter element image; cropping an anti-counterfeiting mark image from the grayscale filter element image; and comparing the anti-counterfeiting mark image with a template mark image to determine product authenticity information of the filter element.

In some embodiments, the comparing the anti-counterfeiting mark image with the template mark image to determine the product authenticity information of the filter element comprises: performing image segmentation processing based on grayscale information on the anti-counterfeiting mark image to obtain a first mark image; performing binarization processing and rotation processing on the first mark image to obtain a binarized image; performing image segmentation processing based on a mark size on the binarized image to obtain a plurality of first mark sub-images; respectively performing translation processing on the plurality of first mark sub-images to obtain a plurality of second mark sub-images corresponding to a second mark image; and comparing the second mark image with the template mark image to determine the product authenticity information.

In some embodiments, the performing the binarization processing and the rotation processing on the first mark image comprises: performing the binarization processing on the first mark image by traversing binarization thresholds within a binarization threshold range, and performing the rotation processing by traversing rotation angles within a rotation angle range.

In some embodiments, the performing the translation processing on the plurality of first mark sub-images comprises: performing the translation processing on the plurality of first mark sub-images by traversing translation actions within a translation action set.

In some embodiments, the comparing the second mark image with the template mark image to determine the product authenticity information comprises: comparing the plurality of second mark sub-images in the second mark image with a plurality of template mark sub-images in the template mark image in one-to-one correspondence to obtain an image difference between the second mark image and the template mark image; and determining the product authenticity information based on the image difference corresponding to the second mark image.

In some embodiments, the determining the product authenticity information based on the image difference corresponding to the second mark image comprises: obtaining a plurality of second mark images; and determining the product authenticity information according to a minimum image difference among image differences corresponding to the plurality of second mark images.

In some embodiments, the cropping the anti-counterfeiting mark image from the grayscale filter element image comprises: determining an anti-counterfeiting mark boundary in the grayscale filter element image based on a target grayscale threshold; and cropping the grayscale filter element image based on the anti-counterfeiting mark boundary and anti-counterfeiting mark size information to obtain the anti-counterfeiting mark image.

To solve the above technical problem, the present disclosure provides another anti-counterfeiting identification method for a filter element. The method comprises: obtaining an anti-counterfeiting mark image of a to-be-identified filter element; performing ternarization processing on the anti-counterfeiting mark image to obtain a ternarized image; and in response to a proportion of pixels with a median grayscale value in the ternarized image being greater than a target proportion threshold, performing an anti-counterfeiting identification operation on the filter element to determine product authenticity information of the filter element.

In some embodiments, the performing the anti-counterfeiting identification operation on the filter element to determine the product authenticity information of the filter element comprises: re-obtaining a plurality of anti-counterfeiting mark images at a first time interval; respectively performing the ternarization processing on the plurality of anti-counterfeiting mark images to obtain a plurality of new ternarized images; and in response to the plurality of new ternarized images comprising at least one target ternarized image, determining the product authenticity information based on an anti-counterfeiting mark image corresponding to the at least one target ternarized image. The proportion of pixels with the median grayscale value in each of the at least one target ternarized image is smaller than or equal to the target proportion threshold.

In some embodiments, the method further comprises, subsequent to the determining the product authenticity information based on the anti-counterfeiting mark image corresponding to the at least one target ternarized image: re-obtaining an anti-counterfeiting mark image at a second time interval to perform anti-counterfeiting identification on the filter element. The second time interval is greater than the first time interval.

In some embodiments, the performing the anti-counterfeiting identification operation on the filter element to determine the product authenticity information of the filter element comprises: transmitting the anti-counterfeiting mark image to a server; and receiving the product authenticity information transmitted by the server.

In some embodiments, the method further comprises, subsequent to the obtaining the ternarized image: in response to the proportion of pixels with the median grayscale value in the ternarized image being smaller than or equal to the target proportion threshold, determining the product authenticity information based on the anti-counterfeiting mark image.

In some embodiments, the anti-counterfeiting mark image is a color image.

In some embodiments, the method further comprises, subsequent to the obtaining the anti-counterfeiting mark image of the to-be-identified filter element and prior to the performing the ternarization processing on the anti-counterfeiting mark image: converting the anti-counterfeiting mark image into a grayscale image.

To solve the above technical problem, the present disclosure provides another anti-counterfeiting identification method for a filter element. The method comprises: obtaining a to-be-processed image of a to-be-identified filter element, where the to-be-processed image comprises an anti-counterfeiting mark of the filter element, and the to-be-processed image may also be referred to as a filter element image; performing image preprocessing on the to-be-processed image to obtain a first target image, a difference degree between an anti-counterfeiting mark region and a background region in the first target image being greater than a difference degree between an anti-counterfeiting mark region and a background region in the to-be-processed image; determining a target region where an anti-counterfeiting mark in the first target image is located based on size information of the anti-counterfeiting mark; and cropping the to-be-processed image based on the target region to obtain the anti-counterfeiting mark image. The anti-counterfeiting mark image is used to determine product authenticity information of the filter element.

In some embodiments, the performing the image preprocessing on the to-be-processed image to obtain the first target image comprises: performing binarization processing on the to-be-processed image to obtain a target binarized image; and for each pixel in the target binarized image, performing expansion filling on a pixel adjacent to the pixel in the target binarized image using a solid-color pixel based on a pixel value of the pixel in the target binarized image, to obtain the first target image.

In some embodiments, an expansion filling direction of the solid-color pixel is determined based on a distribution characteristic of a background region in the target binarized image.

In some embodiments, the determining the target region where the anti-counterfeiting mark in the first target image is located based on the size information of the anti-counterfeiting mark comprises: taking a pixel of the first target image as a reference point, traversing all pixels of the first target image sequentially, and obtaining a count value of a target pixel in a region corresponding to size information in the first target image, the target pixel having a pixel value greater than a target pixel threshold; and determining the target region based on the count value of the target pixel.

In some embodiments, the determining the target region based on the count value of the target pixel comprises: determining a region with a maximum count value of the target pixel in the first target image as the target region.

In some embodiments, the method further comprises, subsequent to the obtaining the count value of the target pixel in the region corresponding to the size information in the first target image: in response to presence of a plurality of regions where the count value of the target pixel in the first target image is greater than a target count threshold, transmitting at least one of the to-be-processed image and the first target image to a server for the server to perform anti-counterfeiting identification on the filter element.

To solve the above technical problem, the present disclosure provides an electronic device. The electronic device comprises a memory and a processor. The memory stores program instructions. The processor is configured to execute the program instructions stored in the memory to implement the method provided in the first aspect as described above.

To solve the above technical problem, the present disclosure provides a water purification device. The water purification device comprises a device body and a main control module carried on the device body. The main control module is configured to implement the method provided in the first aspect as described above. The to-be-identified filter element is mounted on the device body.

To solve the above technical problem, the present disclosure provides a filter element anti-counterfeiting system. The filter element anti-counterfeiting system comprises a water purification device and a server in a communication connection with the water purification device. The water purification device is configured to implement the method provided in the first aspect as described above.

To solve the above technical problem, the present disclosure provides a computer-readable storage medium. The computer-readable storage medium stores a program file, and the program file is executable to implement the method provided in the first aspect as described above.

The beneficial effect of the present disclosure is described below. Unlike the prior art, the present disclosure discloses an anti-counterfeiting identification method for a filter element. After the anti-counterfeiting mark image of the to-be-identified filter element is obtained, the anti-counterfeiting identification operation is performed on the filter element based on the anti-counterfeiting mark image to determine the product authenticity information of the filter element.

### BRIEF DESCRIPTION OF THE DRAWINGS

In order to clearly explain technical solutions according to the embodiments of the present disclosure or in the related art, drawings used in the description of the embodiments or the related art are briefly described below. Obviously, the drawings described below are merely some embodiments of the present disclosure. Based on these drawings, other drawings can be obtained by those skilled in the art without creative effort, in which:
FIG. 1 is a schematic flowchart of a first implementation of an anti-counterfeiting identification method for a filter element according to the present disclosure;
FIG. 2 is a schematic flowchart of a second implementation of an anti-counterfeiting identification method for a filter element according to the present disclosure;
FIG. 3 is a schematic flowchart of a third implementation of an anti-counterfeiting identification method for a filter element according to the present disclosure;
FIG. 4 is a schematic flowchart of a fourth implementation of an anti-counterfeiting identification method for a filter element according to the present disclosure;
FIG. 5 is a schematic flowchart of a fifth implementation of an anti-counterfeiting identification method for a filter element according to the present disclosure;
FIG. 6 is a schematic flowchart of a sixth implementation of an anti-counterfeiting identification method for a filter element according to the present disclosure;
FIG. 7 is a schematic flowchart of an implementation of step S11 according to the present disclosure;
FIG. 8 is a schematic diagram of an implementation of filling a target binarized image with a solid-color pixel according to the present disclosure;
FIG. 9 is a schematic diagram of an implementation of a filter element image according to the present disclosure;
FIG. 10 is a schematic diagram of an implementation of a first target image according to the present disclosure;
FIG. 11 is a schematic diagram of an implementation of counting a target pixel in a first target image according to the present disclosure;
FIG. 12 is a schematic diagram of an implementation of a position of a target region according to the present disclosure;
FIG. 13 is a schematic diagram of an implementation of a framework structure of an electronic device according to the present disclosure;
FIG. 14 is a schematic diagram of an implementation of a framework structure of a water purification device according to the present disclosure;
FIG. 15 is a schematic diagram of an implementation of a framework structure of an anti-counterfeiting system for a filter element according to the present disclosure; and
FIG. 16 is a schematic diagram of an implementation of a framework structure of a computer-readable storage medium according to the present disclosure.

### DETAILED DESCRIPTION

Technical solutions according to embodiments of the present disclosure will be clearly and completely described below in combination with accompanying drawings of the embodiments of the present disclosure. Obviously, the embodiments described below are only a part, rather than all, of the embodiments of the present disclosure. On a basis of the embodiments in the present disclosure, all other embodiments obtained by those of ordinary skill in the art without creative labor shall fall within the scope of the present disclosure.

It should be noted that, when the embodiments of the present disclosure relate to terms such as "first" and "second", the terms such as "first" and "second" are used herein for purposes of description and are not intended to indicate or imply relative importance or significance, or implicitly indicate the number of indicated technical features. Therefore, the feature associated with "first" and "second" may comprise one or more this feature distinctly or implicitly.

In the description of the present disclosure, "plurality" means at least two, such as two or three, unless otherwise specifically defined. All directional indication (such as up, down, left, right, front, and back, etc.) of the embodiments of the present disclosure are only used to explain a relative position relationship, a motion situation, etc. between components in a certain specific posture (as shown in the accompanying drawings). When the specific posture changes, the directional indication also changes accordingly. In addition, terms "comprise", "have", and any variations thereof are intended to cover non-exclusive inclusions. For example, a process, a method, a system, a product, or a device that comprises a series of steps or units is not limited to those clearly listed steps or units, but optionally further comprises steps or units that are not listed, or optionally further comprises steps or units that are inherent to the process, the method, the product, or the device.

Reference herein to "an embodiment" means that a particular feature, structure or characteristic described in combination with the embodiment can be comprised in at least one embodiment of the present disclosure. The appearance of this phrase in various places in the specification is not necessarily all referring to the same embodiment, nor is it an independent or alternative embodiment that is mutually exclusive of other embodiments. Those skilled in the art understand, both explicitly and implicitly, that the embodiments described herein may be combined with other embodiments in any suitable manner.

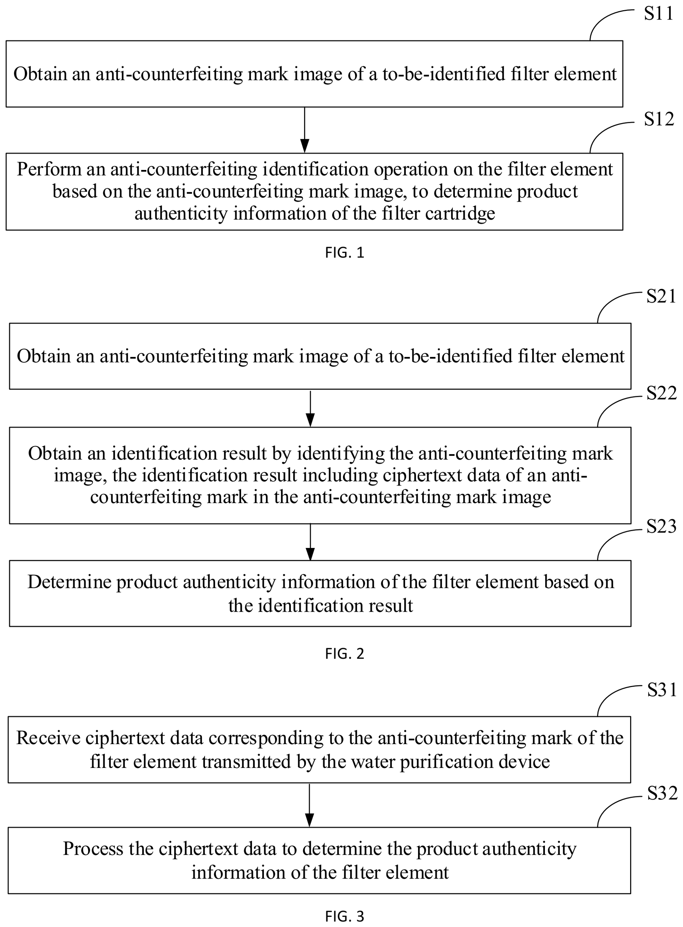

Referring to FIG. 1, FIG. 1 is a schematic flowchart of a first implementation of an anti-counterfeiting identification method for a filter element according to the present disclosure. The method comprises operations at steps S11 to S12.

At step S11, an anti-counterfeiting mark image of a to-be-identified filter element is obtained.

In an implementation, the anti-counterfeiting mark image of the to-be-identified filter element may be obtained by cropping a filter element image. The filter element image is obtained by photographing the to-be-identified filter element. The to-be-identified filter element comprises an anti-counterfeiting mark. The anti-counterfeiting mark may be a two-dimensional code containing data information such as a production date, a model, and a validity period of the filter element. It can be understood that, in another implementation, the anti-counterfeiting mark image of the to-be-identified filter element may also be an image of the filter element. The to-be-identified filter element may be a filter element mounted when a water purification device leaves the factory, or a filter element replaced by a user. An image capture device for capturing the filter element image may be any device capable of capturing an image, such as a camera. In order to reduce costs, an existing camera with the lowest processing capability may be selected. The image capture device may be mounted inside the water purification device. When the water purification device is powered on, the image capture device may photograph the to-be-identified filter element to obtain the filter element image.

The anti-counterfeiting mark image may be cropped from the filter element image in any of the following manners. In a first manner, cropping coordinates are determined based on a relative position between the image capture device and the to-be-identified filter element in the water purification device, where the image capture device is capable of photographing the to-be-identified filter element to obtain the filter element image; and image data is cropped from the filter element image based on the cropping coordinates to obtain the anti-counterfeiting mark image.

In a second manner, a grayscale filter element image is obtained based on grayscale data of the filter element image, and the anti-counterfeiting mark image is cropped from the grayscale filter element image. In an implementation, an anti-counterfeiting mark boundary in the grayscale filter element image may be determined based on a target grayscale threshold, and a second filter element image may be cropped based on the anti-counterfeiting mark boundary and anti-counterfeiting mark size information, to obtain the anti-counterfeiting mark image.

In a third manner, image preprocessing is performed on the filter element image to obtain a first target image, where a difference degree between an anti-counterfeiting mark region and a background region in the first target image is greater than a difference degree between an anti-counterfeiting mark region and a background region in the filter element image; a target region where an anti-counterfeiting mark is located in the first target image is determined based on size information of the anti-counterfeiting mark; and the filter element image is cropped based on the target region to obtain the anti-counterfeiting mark image.

At step S12, an anti-counterfeiting identification operation is performed on the filter element based on the anti-counterfeiting mark image, to determine product authenticity information of the filter element.

In an implementation, the performing the anti-counterfeiting identification operation on the filter element based on the anti-counterfeiting mark image, to determine the product authenticity information of the filter element comprises: processing the anti-counterfeiting mark image to obtain a processing result of the anti-counterfeiting mark image; and determining the product authenticity information based on the processing result. Processing the anti-counterfeiting mark image may comprise identifying the anti-counterfeiting mark image or comparing the anti-counterfeiting mark image with a template mark image. Correspondingly, the processing result of the anti-counterfeiting mark image comprises an identification result or a comparison result.

In an implementation, the processing result is an identification result that comprises ciphertext data of an anti-counterfeiting mark in the anti-counterfeiting mark image. A main control module of the water purification device may identify the anti-counterfeiting mark image to obtain the ciphertext data of the anti-counterfeiting mark. The anti-counterfeiting mark image may also be transmitted to another device with an identification capability, and the ciphertext data is obtained through identification by the other device. The determining the product authenticity information based on the processing result comprises: decrypting the ciphertext data to obtain plaintext data corresponding to the anti-counterfeiting mark, and determining the product authenticity information based on the plaintext data. In an implementation, it may be determined whether the plaintext data conforms to a predetermined encoding rule. The plaintext data is obtained by encoding production information of the filter element according to the predetermined encoding rule. The filter element is determined to be genuine in response to the plaintext data conforming to the predetermined encoding rule. The plaintext data corresponding to the anti-counterfeiting mark may also be directly compared with reference plaintext data. In response to the plaintext data corresponding to the anti-counterfeiting mark being the same as the reference plaintext data, the filter element is genuine. The reference plaintext data is set when the filter element leaves the factory. In this implementation, the determining the product authenticity information based on the processing result may be executed by the main control module. In another implementation, the determining the product authenticity information based on the processing result may also be executed by a server, i.e., the main control module transmits the ciphertext data to the server, and the server decrypts the ciphertext data to obtain the plaintext data corresponding to the anti-counterfeiting mark, and determines the product authenticity information based on the plaintext data.

In another implementation, the determining the product authenticity information based on the processing result may further comprise: identifying the anti-counterfeiting mark image by the main control module to obtain the ciphertext data of the anti-counterfeiting mark, and transmitting the ciphertext data by the main control module to the server; and decrypting the ciphertext data by the server to obtain the plaintext data corresponding to the anti-counterfeiting mark and obtaining association information corresponding to the plaintext data by the server. The association information indicates whether the filter element is associated with another water purification device. The product authenticity information of the filter element is determined based on the association information. In this implementation, after obtaining the ciphertext data, the main control module directly transmits the ciphertext data to the server. In another implementation, after obtaining the ciphertext data, the main control module decrypts the ciphertext data to obtain plaintext data, and determines whether the plaintext data conforms to the predetermined encoding rule. In response to the plaintext data conforming to the predetermined encoding rule, the main control module transmits the ciphertext data to the server to cause the server to determine the product authenticity information of the filter element based on the association information. In response to the plaintext data not conforming to the predetermined encoding rule, the main control module determines the filter element to be counterfeit.

In another implementation, the processing result is a comparison result obtained by comparing the anti-counterfeiting mark image with the template mark image. The product authenticity information of the filter element is determined based on the comparison result. The template mark image contains a correct anti-counterfeiting mark. By comparing the anti-counterfeiting mark image with the template mark image, a similarity level between the anti-counterfeiting mark image and the template mark image is determined. When the similarity level is greater than a predetermined value, the filter element is determined to be genuine.

In an implementation, the to-be-identified filter element correspondingly has an auxiliary identification mark. The method further comprises, prior to the obtaining the processing result of the anti-counterfeiting mark image: determining whether the auxiliary identification mark in the filter element image is the same as a target identification mark, where the filter element image comprises the auxiliary identification mark and an anti-counterfeiting mark; and in response to the auxiliary identification mark being the same as the target identification mark, executing the step of obtaining the processing result of the anti-counterfeiting mark image.

In an implementation, the processing result of the anti-counterfeiting mark image is obtained by processing a compressed anti-counterfeiting mark image. For example, an identification result is obtained by identifying the compressed anti-counterfeiting mark image, or a comparison result is obtained by comparing the compressed anti-counterfeiting mark image with a compressed template mark image. The method further comprises, prior to the step of obtaining the processing result of the anti-counterfeiting mark image: dividing the anti-counterfeiting mark image into one or more image blocks based on a random-access memory space of a processor in a water purification device; and obtaining the compressed anti-counterfeiting mark image of the filter element based on compressed blocks respectively corresponding to the one or more image blocks. The compressed anti-counterfeiting mark image of the filter element is to be processed to obtain the processing result of the anti-counterfeiting mark image.

In another implementation, the performing the anti-counterfeiting identification operation on the filter element based on the anti-counterfeiting mark image to determine the product authenticity information of the filter element comprises: performing ternarization processing on the anti-counterfeiting mark image to obtain a ternarized image; and performing the anti-counterfeiting identification operation on the filter element based on a comparison result between a proportion of pixels with a median grayscale value in the ternarized image and a target proportion threshold, to determine the product authenticity information of the filter element.

In an implementation, in response to the proportion of pixels with the median grayscale value in the ternarized image being greater than the target proportion threshold, a plurality of anti-counterfeiting mark images are obtained at a first time interval; the ternarization processing is performed on each of the plurality of anti-counterfeiting mark images to obtain a plurality of new ternarized images. In response to the plurality of new ternarized images comprising at least one target ternarized image, the product authenticity information is determined based on an anti-counterfeiting mark image corresponding to the at least one target ternarized image. The proportion of pixels with the median grayscale value in the at least one target ternarized image is smaller than or equal to the target proportion threshold.

In another specific implementation, in response to the proportion of pixels with the median grayscale value in the ternarized image being smaller than or equal to the target proportion threshold, the product authenticity information is determined based on the anti-counterfeiting mark image.

Both the determining the product authenticity information based on the anti-counterfeiting mark image corresponding to the target ternarized image and the determining the product authenticity information based on the anti-counterfeiting mark image may adopt the following steps to determine the authenticity of the filter element. Ciphertext data is obtained by identifying the anti-counterfeiting mark image. Then, the authenticity of the filter element is determined based on the ciphertext data. For the detailed implementation process of this step, reference can be made to the above description, and details are omitted herein. Alternatively, a comparison result is obtained by comparing the anti-counterfeiting mark image with the template mark image, and the authenticity of the filter element is determined based on the comparison result.

Through the above manner, the product authenticity information of the filter element can be determined based on the anti-counterfeiting mark image of the filter element, realizing anti-counterfeiting of the filter element.

Referring to FIG. 2, FIG. 2 is a schematic flowchart of a second implementation of an anti-counterfeiting identification method for a filter element according to the present disclosure. The method comprises operations at steps S21 to S23.

At step S21, an anti-counterfeiting mark image of a to-be-identified filter element is obtained.

For an implementation of S21, reference can be made to above step S11, and details are omitted herein.

At step S22, an identification result obtained by identifying the anti-counterfeiting mark image is obtained. The identification result comprises ciphertext data of an anti-counterfeiting mark in the anti-counterfeiting mark image.

In an implementation, the anti-counterfeiting mark image may be transmitted to the main control module in the water purification device, and the main control module identifies the anti-counterfeiting mark image to obtain the ciphertext data of the anti-counterfeiting mark in the anti-counterfeiting mark image. The ciphertext data of the anti-counterfeiting mark may be determined as a first identification result.

At step S23, the product authenticity information of the filter element is determined based on the identification result.

The product authenticity information of the filter element is determined based on the ciphertext data, i.e., a second identification result indicating whether the to-be-identified filter element is counterfeit is obtained based on the first identification result.

In an implementation, the main control module in the water purification device may decrypt the ciphertext data to obtain the plaintext data of the anti-counterfeiting mark, and determines whether the plaintext data is the same as encoded data of the filter element when the filter element leaves the factory. The plaintext data being the same as the encoded data of the filter element indicates that the filter element is not counterfeit. This process may also be executed by a server connected to the water purification device, i.e., the water purification device transmits the first identification result to the server, and the server processes the first identification result to obtain the second identification result.

In an implementation, the anti-counterfeiting mark may be a two-dimensional code. The two-dimensional code is identified to obtain the ciphertext data corresponding to the anti-counterfeiting mark, and the ciphertext data may be obtained by encrypting plaintext data containing a production date, a model, a validity period, and the like of the filter element. In an implementation, the second identification result is determined by the server based on association information corresponding to the to-be-identified filter element. The association information is obtained based on the plaintext data corresponding to the anti-counterfeiting mark of the filter element and indicates whether the to-be-identified filter element is associated with another water purification device. Moreover, the plaintext data is obtained through decryption of the ciphertext data received from the water purification device by the server. In some embodiments, the water purification device transmits the ciphertext data corresponding to the anti-counterfeiting mark to the server, and the server decrypts the ciphertext data to obtain the plaintext data corresponding to the anti-counterfeiting mark, and determines whether the plaintext data conforms to the predetermined encoding rule, where the plaintext data is obtained by encoding the production information of the filter element according to the predetermined encoding rule. The production information of the filter element refers to information such as the production date, model, and validity period of the filter element, and the plaintext data may be a string of characters. The predetermined encoding rule may be, for example, the meaning of each character in the plaintext data. For example, the first character represents the model, and characters 2 to 9 represent the production date. It can be understood that, the predetermined encoding rule is set by the user. In response to the plaintext data conforming to the predetermined encoding rule, the second identification result is obtained based on the plaintext data.

In the above, anti-counterfeiting detection of the filter element may be realized by obtaining the anti-counterfeiting mark image of the filter element and the identification result obtained by identifying the anti-counterfeiting mark image of the filter element, and determining whether the to-be-identified filter element is counterfeit based on the identification result. The identification result comprises the ciphertext data of the anti-counterfeiting mark of the filter element. The ciphertext data is transmitted during communication, which can reduce a possibility of the anti-counterfeiting mark of the filter element being stolen during the communication transmission, and is beneficial to an improvement in safety of the anti-counterfeiting mark of the filter element and reliability of the anti-counterfeiting detection of the filter element.

In another implementation, the filter element image comprises an auxiliary identification mark and an anti-counterfeiting mark of the filter element. Before step S23 is executed, it may be determined whether the auxiliary identification mark in the filter element image is the same as a target identification mark. In response to the auxiliary identification mark being the same as the target identification mark, the steps of obtaining the processing result of the anti-counterfeiting mark image and determining the product authenticity information of the filter element based on the processing result are executed.

In an implementation, the filter element image comprises an anti-counterfeiting mark and an auxiliary identification mark. Before the anti-counterfeiting mark is identified, it may be determined whether the auxiliary identification mark in the filter element image is the same as the target identification mark by determining whether a pixel value of each pixel in the second image data of the auxiliary identification mark in the filter element image is within a predetermined range. In response to the pixel value of each pixel being within the predetermined range, the pixel value of each pixel is converted into a grayscale value. It is determined whether the auxiliary identification mark and the target identification mark are the same based on a difference between the grayscale value and a standard grayscale value. The standard grayscale value is obtained by performing grayscale processing on the image data of the target identification mark.

In some embodiments, the filter element image may be identified to determine a second image region where the auxiliary identification mark is located. In an implementation, a size of the anti-counterfeiting mark of the filter element is known, and the anti-counterfeiting mark of the filter element is located in a first image region of the filter element image. Moreover, a size of the anti-counterfeiting mark of the filter element in the filter element image has a fixed relationship with a size of the auxiliary identification mark in the filter element image. For example, a length of the anti-counterfeiting mark of the filter element is the same as a length of the auxiliary identification mark, and a width of the anti-counterfeiting mark of the filter element is 3 times or 4 times a width of the auxiliary identification mark. After a position of the anti-counterfeiting mark of the filter element is known, the second image region where the auxiliary identification mark is located may be determined according to the size of the anti-counterfeiting mark of the filter element and the size relationship between the anti-counterfeiting mark of the filter element and the auxiliary identification mark. In another implementation, the second image region where the auxiliary identification mark is located may also be determined according to the pixel value of each pixel in the filter element image. For example, the anti-counterfeiting mark of the filter element is black and white, the auxiliary identification mark is colored, and the second image region may be determined according to the difference in pixel values.

After the second image region is determined, the second image data may be obtained. The second image data comprises the pixel value of each pixel in the second image region, and it is determined whether the pixel value of each pixel is within the predetermined range. Due to differences in shooting light, pixel values of the same pixel in two images of the same object captured at the same shooting angle may differ, and thus, the predetermined range is set. For example, the predetermined range is set as a range around the center of an RGB value of a target color, and the target color is a color that is expected to be displayed in the second image region. In an implementation, in response to the pixel value of each pixel being within the predetermined range, the pixel value of each pixel is converted into a grayscale value that may range from 0 to 255, and it is determined whether the auxiliary identification mark is the same as the target identification mark based on the difference between the grayscale value and the standard grayscale value. The standard grayscale value is obtained by performing grayscale processing on the image data of the target identification mark. In response to the difference being within a predetermined difference range, it is determined that the auxiliary identification mark in the filter element image is the same as the target identification mark. In response to the difference not being within the predetermined difference range, it is determined that the auxiliary identification mark in the filter element image is different from the target identification mark. It can be understood that, the predetermined range and the predetermined difference range may be set by the user as needed, and are not specifically limited herein. In another implementation, in response to the pixel value of each pixel being within the predetermined range, binarization processing is performed on the pixel value of each pixel, to cause the pixel value of each pixel to be 0 or 255, and it is determined whether the pixel value of each pixel is the same as a standard pixel value, where the standard pixel value is obtained by performing binarization processing on the image data of the target identification mark. In response to the pixel value of each pixel being the same as the standard pixel value, it is determined that the auxiliary identification mark is the same as the target identification mark.

In another implementation, it may be determined whether the auxiliary identification mark in the filter element image is the same as the target identification mark by using a first hash value of a standard image and a second hash value of the second image data of the auxiliary identification mark in the filter element image. In some embodiments, the first hash value of the standard image is obtained, and the second hash value of the second image data of the auxiliary identification mark in the filter element image is obtained. It is determined whether the auxiliary identification mark is the same as the target identification mark based on the first hash value and the second hash value. In some embodiments, the standard image contains the target identification mark having a size that may be the same as a size of the second image region where the auxiliary identification mark is located. The first hash value and the second hash value are obtained, and a Hamming distance between the first hash value and the second hash value is calculated. In response to the Hamming distance being smaller than a predetermined distance, it is determined that the auxiliary identification mark is the same as the target identification mark. In response to the Hamming distance being greater than the predetermined distance, it is determined that the auxiliary identification mark is different from the target identification mark. It can be understood that the predetermined distance may be set by the user. For example, the predetermined distance is set to 5, 10, or the like.

In other implementations, after the filter element image is obtained, the main control module in the water purification device may compress the filter element image to obtain a compressed image and determine whether the auxiliary identification mark is the same as the target identification mark based on the compressed image. The processor compressing the filter element image comprises: dividing the filter element image into one or more image blocks based on the random-access memory space of the processor; and performing binarization on the one or more image blocks to obtain data blocks. In some embodiments, a pixel extreme value of each channel in the RGB color space of the filter element image is obtained, and a binarization threshold is determined based on the pixel extreme value and a predetermined error of each channel. The binarization threshold may comprise an upper limit value or a lower limit value. For example, the upper limit value of an R channel is 255/8-5, the upper limit value of a G channel is 255/4-10, the upper limit value of a B channel is 255/8-5, and the lower limit value of the R channel is 10, where 5 and 10 are predetermined errors. Based on the binarization threshold, binarization is performed on each pixel in the image block to obtain the data block. In some embodiments, it is determined whether the pixel value of each pixel in each channel is greater than the upper limit value of the channel; and in response to the pixel value of the pixel in each channel being greater than the upper limit value, the pixel is binarized into a first value. Alternatively, it is determined whether the pixel value of each pixel in each channel is smaller than the lower limit value of the channel; and in response to the pixel value of the pixel in each channel being smaller than the lower limit value, the pixel is binarized into a second value. The first value may be 0, which represents white. The second value may be 1, which represents black. At this time, the obtained data block only contains 0 and 1. Further, the data block is compressed to obtain a compressed block corresponding to the data block. The data block is divided into a plurality of sub-data blocks. For each sub-data block, elements in the sub-data block are weighted and averaged to obtain compressed data corresponding to the sub-data block. The compressed block is obtained by using the compressed data corresponding to the plurality of sub-data blocks. Finally, the compressed image corresponding to the filter element image is obtained based on the compressed blocks respectively corresponding to the one or more image blocks.

Referring to FIG. 3, FIG. 3 is a schematic flowchart of a third implementation of an anti-counterfeiting identification method for a filter element according to the present disclosure. The method comprises operations at steps S31 to S32.

At step S31, ciphertext data corresponding to an anti-counterfeiting mark of a filter element transmitted by a water purification device is received.

The ciphertext data is obtained by identifying first image data of the anti-counterfeiting mark of the filter element in a filter element image. The filter element image may further comprise an auxiliary identification mark, and the water purification device transmits the ciphertext data based on the auxiliary identification mark being the same as a target identification mark. The filter element image is captured by photographing the to-be-identified filter element mounted in the water purification device.

This implementation may be executed by the server. The server may comprise a memory and a processor coupled to each other, and the processor is configured to execute program instructions stored in the memory to perform steps S21 and S22. The water purification device transmits the ciphertext data corresponding to the anti-counterfeiting mark of the filter element to the server. In an implementation, before transmitting the ciphertext data corresponding to the anti-counterfeiting mark of the filter element to the server, the water purification device may determine whether the auxiliary identification mark in the filter element image is the same as the target identification mark. For specific determination steps, reference can be made to the relevant steps in the foregoing implementations, and details are omitted herein. The auxiliary identification mark in the filter element image being the same as the target identification mark indicates that the filter element in the water purification device is produced by a target manufacturer. Further, the water purification device identifies the first image data of the anti-counterfeiting mark of the filter element in the filter element image to obtain the ciphertext data corresponding to the anti-counterfeiting mark of the filter element; and transmits the ciphertext data to the server.

In another implementation, after the water purification device determines that the auxiliary identification mark in the filter element image is the same as the target identification mark and identifies the first image data of the anti-counterfeiting mark of the filter element in the filter element image to obtain the ciphertext data corresponding to the anti-counterfeiting mark of the filter element, the water purification device may decrypt the ciphertext data to obtain the plaintext data corresponding to the anti-counterfeiting mark of the filter element; and perform a preliminary determination on the plaintext data. For example, it may be determined whether the plaintext data conforms to a predetermined encoding rule. The predetermined encoding rule is used to encode the production information of the filter element to obtain the plaintext data when the filter element leaves the factory. In response to the plaintext data conforming to the predetermined encoding rule, the ciphertext data corresponding to the anti-counterfeiting mark of the filter element is transmitted to the server.

At step S32, the ciphertext data is processed to determine the product authenticity information of the filter element.

After receiving the ciphertext data, the server decrypts the ciphertext data to obtain the plaintext data corresponding to the anti-counterfeiting mark of the filter element. In an implementation, the plaintext data may be compared with original data corresponding to the anti-counterfeiting mark of the filter element stored in a database to obtain a comparison result, and the identification result may be determined based on the comparison result. The original data is obtained by encoding the production information of the filter element when the filter element leaves the factory. The comparison result comprises the plaintext data being the same as the original data or the plaintext data being different from the original data. In response to the comparison result indicating that the plaintext data is the same as the original data, the to-be-identified filter element is determined to be counterfeit. In response to the comparison result indicating that the plaintext data is different from the original data, the to-be-identified filter element is determined to be genuine.

In another implementation, the server may further obtain device information of the water purification device or receive the device information transmitted by the water purification device; and compare the plaintext data with the original data corresponding to the anti-counterfeiting mark of the filter element stored in the database to obtain a comparison result. Moreover, the comparison result indicates that the plaintext data is the same as the original data, it indicates that the to-be-identified filter element is manufactured by the target manufacturer. Further, in response to the comparison result indicating that the plaintext data is the same as the original data, it is determined whether the to-be-identified filter element is associated with another water purification device based on the device information and the plaintext data. The association information indicating whether the to-be-identified filter element is associated with another water purification device may be stored in the database, i.e., the database is searched to determine whether there is association information indicating that the to-be-identified filter element is associated with another water purification device. In response to no association information indicating that the to-be-identified filter element is associated with another water purification device being found in the database, it is determined that the to-be-identified filter element is not associated with another water purification device. In response to the to-be-identified filter element not being associated with another water purification device, the to-be-identified filter element is determined to be genuine and is associated with the water purification device. When there is information indicating that the to-be-identified filter element is associated with another water purification device, in response to the to-be-identified filter element being associated with another water purification device, the filter element is determined to be counterfeit.

In this implementation, when each filter element leaves the factory, the original data corresponding to the anti-counterfeiting mark of the filter element is stored in the database. Therefore, when the to-be-identified filter element is in use, it can be determined whether the filter element is genuine by comparing the plaintext data corresponding to the anti-counterfeiting mark of the to-be-identified filter element with the original data. Further, since each filter element is unique and can only be associated with one water purification device, it can be determined whether the to-be-identified filter element is counterfeit by determining whether the to-be-identified filter element is associated with another water purification device. In this way, when illegal merchants copy the anti-counterfeiting mark of the same to-be-identified filter element on a large scale, the server may immediately detect that the to-be-identified filter element is counterfeit as long as at least two water purification devices are connected to the network. The target manufacturer may locate sales region of the water purification device and the counterfeit to-be-identified filter element based on the association information between the counterfeit to-be-identified filter element and the water purification device, and further hold the illegal merchants accountable.

In the above manner, it is determined whether the auxiliary identification mark is the same as the target identification mark before the anti-counterfeiting mark of the filter element is identified. In response to the auxiliary identification mark being the same as the target identification mark, the anti-counterfeiting mark of the filter element is identified. In response to the auxiliary identification mark being different from the target identification mark, the anti-counterfeiting mark of the filter element is not identified. In this way, the target manufacturer can only perform anti-counterfeiting identification on a filter element produced by itself, instead of mistakenly identifying filter elements produced by other manufacturers, which reduces detection time and thus lowers detection costs. Further, as long as the water purification device is connected to the network, its interface determines whether the to-be-identified filter element is counterfeit via the server, rather than the user simply scanning the anti-counterfeiting mark of the filter element to make such a determination, which enables the manufacturer of the to-be-identified filter element to clearly know whether the filter element is counterfeit, facilitating right protection of the manufacturer.

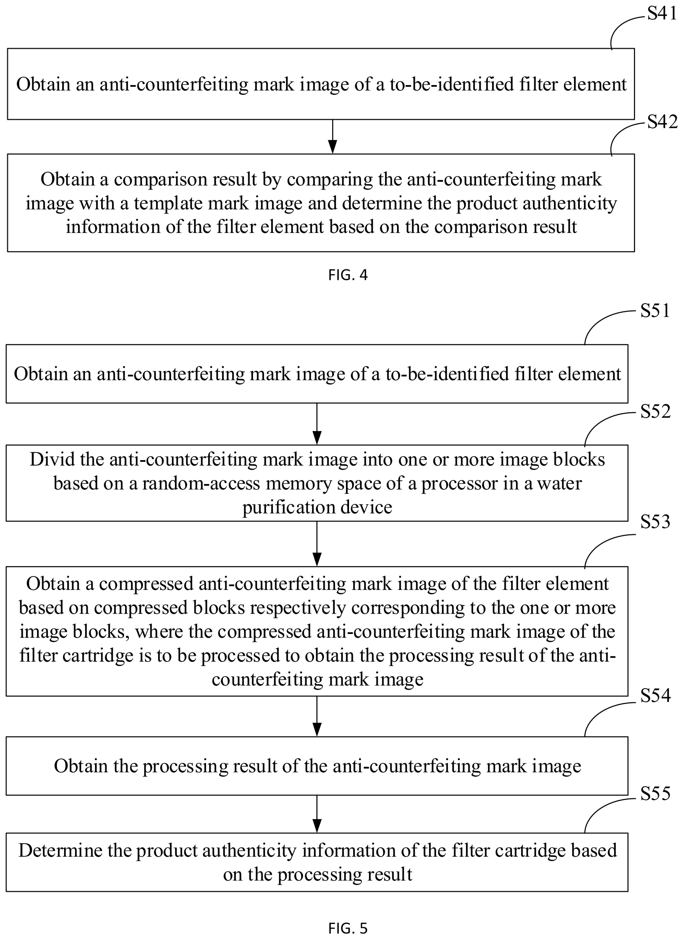

Referring to FIG. 4, FIG. 4 is a schematic flowchart of a fourth implementation of an anti-counterfeiting identification method for a filter element according to the present disclosure. The method comprises operations at steps S41 to S42.

At step S41, an anti-counterfeiting mark image of a to-be-identified filter element is obtained.

In an implementation, the anti-counterfeiting mark image is cropped from a filter element image. The filter element image is obtained by photographing the filter element with an image capture device, and may be a YUV image, which is an image storing data using three components: Y, U, and V, where Y represents brightness, i.e., a grayscale value, while U and V both represent chrominance and respectively used to describe color and color saturation.

In this step, the filter element image in YUV format is directly captured, which places low requirements on the imaging performance of the image capture device and is beneficial to reducing anti-counterfeiting identification costs. Moreover, compared with an image in RGB format, the filter element image has a smaller data volume, which facilitates storage and processing in a low-cost microcontroller unit (MCU) with a small random-access memory (RAM).

The step of cropping the anti-counterfeiting mark image from the filter element image comprises: obtaining a grayscale filter element image based on grayscale data of the filter element image; and cropping the anti-counterfeiting mark image from the grayscale filter element image. In this embodiment, the grayscale data of the filter element image is extracted to obtain the grayscale filter element image, completing the collection and storage of the filter element image data. In actual execution, the grayscale filter element image may be stored in an on-chip flash memory of the microcontroller unit for subsequent processing. The grayscale filter element image is cropped to remove image regions other than the anti-counterfeiting mark, to obtain the anti-counterfeiting mark image with an even smaller data volume.

In an embodiment, the cropping the anti-counterfeiting mark image from the grayscale filter element image comprises: determining an anti-counterfeiting mark boundary in the grayscale filter element image based on a target grayscale threshold; and cropping the grayscale filter element image based on the anti-counterfeiting mark boundary and anti-counterfeiting mark size information to obtain the anti-counterfeiting mark image. In this embodiment, the anti-counterfeiting mark boundary in the grayscale filter element image is found according to a predetermined target grayscale threshold, and the grayscale filter element image is cropped based on the anti-counterfeiting mark boundary and the anti-counterfeiting mark size information. It can be understood that when cropping the grayscale filter element image according to the anti-counterfeiting mark size information, it may be first determined whether the size of the grayscale filter element image is the same as the pre-stored anti-counterfeiting mark size information. In response to the size of the grayscale filter element image being different from the pre-stored anti-counterfeiting mark size information, the grayscale filter element image is scaled in an appropriate proportion.

At step S42, a comparison result is obtained by comparing the anti-counterfeiting mark image with a template mark image, and the product authenticity information of the filter element is determined based on the comparison result.

In an implementation, after the anti-counterfeiting mark image is obtained by cropping, the anti-counterfeiting mark image is compared with the template mark image. The authenticity of the filter element is determined according to a degree of difference between the currently collected anti-counterfeiting mark image and the template mark image. In response to the difference between the anti-counterfeiting mark image and the template mark image being large, the filter element is determined to be counterfeit. In response to the difference between the anti-counterfeiting mark image and the template mark image being small, the filter element is determined to be genuine.

It should be noted that by comparing with the template mark image, there is no need to run a complex image processing algorithm in a processor such as a microcontroller unit, which reduces processor requirements for filter element anti-counterfeiting identification.

In an implementation, the comparing the anti-counterfeiting mark image with the template mark image to obtain the comparison result and determining the product authenticity information of the filter element based on the comparison result comprises: performing image segmentation processing based on grayscale information on the anti-counterfeiting mark image to obtain a first mark image; performing binarization processing and rotation processing on the first mark image to obtain a binarized image; performing image segmentation processing based on a mark size on the binarized image to obtain a plurality of first mark sub-images; respectively performing translation processing on the plurality of first mark sub-images to obtain a plurality of second mark sub-images corresponding to a second mark image; and comparing the second mark image with the template mark image to determine the product authenticity information.

The image segmentation refers to dividing an image into a plurality of nonoverlapping regions according to features such as grayscale, color, spatial texture, and geometric shape, which allows these features to show consistency or similarity in one region and significant differences between different regions.

In this embodiment, the image segmentation is performed according to the grayscale information of the anti-counterfeiting mark image to obtain the first mark image, which reduces an impact of factors other than the anti-counterfeiting mark in the anti-counterfeiting mark image on the anti-counterfeiting identification of the filter element.

After the binarization processing and rotation processing are performed on the first mark image, second image segmentation is performed according to the mark size of the anti-counterfeiting mark to obtain a plurality of first mark sub-images, and each of the plurality of first mark sub-images corresponds to a different region of the anti-counterfeiting mark. For example, the first mark image comprises an anti-counterfeiting mark "Abcde", and the image segmentation is performed on the binarized image of the first mark image according to the mark size of each letter in "Abcde". The anti-counterfeiting mark "Abcde" is divided into five first mark sub-images respectively corresponding to the letters "A", "b", "c", "d", and "e", i.e., the first mark image containing "Abcde" corresponds to five first mark sub-images.

After the first mark sub-images are obtained through segmentation, translation processing is performed on the plurality of first mark sub-images to obtain a plurality of corresponding second mark sub-images. The plurality of second mark sub-images form a second mark image, and the second mark image is compared with the template mark image to determine the authenticity of the filter element.

In some embodiments, the performing the binarization processing and the rotation processing on the first mark image may comprise: performing binarization processing on the first mark image by traversing binarization thresholds within a binarization threshold range, and performing rotation processing by traversing rotation angles within a rotation angle range.

In this embodiment, the first mark image undergoes multiple binarization and rotation processes until the binarization thresholds within the binarization threshold range and the rotation angles within the rotation angle range are traversed, to obtain a plurality of binarized images. Then, the image segmentation processing based on the mark size and the translation processing are performed on each binarized image, to obtain a plurality of second mark images. The second mark images are compared with the template mark image to determine the authenticity of the filter element. For example, the binarization threshold range comprises a binarization threshold 1, a binarization threshold 2, and a binarization threshold 3, while the rotation angle range comprises a rotation angle 1 and a rotation angle 2.

Performing the binarization processing and the rotation processing on the first mark image comprises the following steps. The binarization processing is performed on the first mark image respectively according to the binarization threshold 1, the binarization threshold 2, and the binarization threshold 3 to obtain three binarized images. Then, the rotation processing is performed on each of the three binarized images at the rotation angle 1 and the rotation angle 2 respectively, to obtain six rotated and binarized images.

In some embodiments, the performing the translation processing on the plurality of first mark sub-images may comprise: performing translation processing on the plurality of first mark sub-images by traversing translation actions within a translation action set.

In this embodiment, the first mark sub-image undergoes translation processing by traversing the translation actions in the translation action set. One first mark sub-image may be processed to obtain a plurality of second mark sub-images corresponding to different translation actions. For example, the translation action set comprises upward translation, downward translation, and leftward translation. Performing the translating processing on one first mark sub-image may obtain three second mark sub-images.

In some embodiments, the comparing the second mark image with the template mark image to determine the product authenticity information comprises: comparing the plurality of second mark sub-images in the second mark image with a plurality of template mark sub-images in the template mark image in one-to-one correspondence to obtain an image difference between the second mark image and the template mark image; and determining the product authenticity information based on the image difference corresponding to the second mark image.

The second mark image comprises a plurality of second mark sub-images, and each of the plurality of second mark sub-images represents a region of the anti-counterfeiting mark. By comparing the second mark sub-images with the template mark sub-images in the template mark image in one-to-one correspondence, degrees of difference of different regions of the anti-counterfeiting mark of the filter element 300 is obtained. The authenticity of the filter element is determined according to the image difference between the second mark image and the template mark image.

For example, the second mark image comprises second mark sub-images corresponding to the five letters "A", "b", "c", "d", and "e", and these five second mark sub-images are compared with the corresponding template mark sub-images in the template mark image to obtain an image difference between each second mark sub-image and its corresponding template mark sub-image.

In actual execution, the image difference may be a pixel difference between corresponding pixels in the two images. In some embodiments, the determining the product authenticity information based on the image difference corresponding to the second mark image may comprise: obtaining a plurality of second mark images; and determining the product authenticity information according to a minimum image difference among image differences corresponding to the plurality of second mark images.

It can be understood that the image captured by the image capture device differs from a pre-stored template mark image in terms of a capture angle, light, or other aspects. In this embodiment, the plurality of second mark images may be obtained through binarization processing, rotation processing, and translation processing, achieving an expansion of image data volume. In this way, sufficient comparison with the template mark image can be achieved without changing anti-counterfeiting mark features of the current filter element, and the impact of image capture angle, light, and other factors on the comparison can be reduced, ensuring the accuracy of filter element anti-counterfeiting identification.

Referring to FIG. 5, FIG. 5 is a schematic flowchart of a fifth implementation of an anti-counterfeiting identification method for a filter element according to the present disclosure. The method comprises operations at steps S51 to S55.

At step S51, an anti-counterfeiting mark image of a to-be-identified filter element is obtained.

For the implementation of step S51, reference can be made to above step S11, and details are omitted herein. In this implementation, the anti-counterfeiting mark image may be a multi-channel image, such as a three-channel image or a four-channel image.

The anti-counterfeiting mark image may be a captured image taken by an image capture device or may be obtained by cropping the captured image. For example, if the captured image contains a lot of blank regions or invalid information, the captured image may be cropped. In an implementation, cropping coordinates may be determined based on a relative position between the image capture device and the to-be-identified filter element in the water purification device; and image data is cropped based on the cropping coordinates from the captured image of the image capture device to obtain the anti-counterfeiting mark image. That is, the position of the image capture device relative to the filter element is fixed, and the processor knows a coordinate range of the auxiliary identification mark and the anti-counterfeiting mark of the filter element in the captured image. Therefore, cropping may be performed according to the coordinate range to obtain the anti-counterfeiting mark image.

At step S52, the anti-counterfeiting mark image is divided into one or more image blocks based on a random-access memory space of the processor in the water purification device.

Since each processor has a different processing capability, the anti-counterfeiting mark image may be divided into one or more image blocks according to the random-access memory space of the processor, and the data size of each image block may be smaller than or equal to the random-access memory space of the processor. In an implementation, the processor is configured to process the anti-counterfeiting mark image captured by the image capture device. It is assumed that a size of one frame of anti-counterfeiting mark image captured by the image capture device is 153k and the random-access memory space of the processor is 16k, the anti-counterfeiting mark image may be divided into 10 image blocks.

In an implementation, the anti-counterfeiting mark image may be divided in a predetermined coordinate order. For example, a coordinate system is established with a pixel at an upper left corner of the anti-counterfeiting mark image as the origin, an X-axis is established towards an upper right corner of the anti-counterfeiting mark image, and a Y-axis is established towards a lower left corner of the anti-counterfeiting mark image. It is assumed that the anti-counterfeiting mark image contains 320*240 pixels, a length of the anti-counterfeiting mark image in the X-axis may be considered as 320, and a length of the anti-counterfeiting mark image in the Y-axis may be considered as 240. Each image block obtained by dividing the anti-counterfeiting mark image contains coordinate information of the image block in the coordinate system. For example, a first image block has a length of 10*10, and its coordinate range is from (0, 0) to (9, 9).

At step S53, a compressed anti-counterfeiting mark image of the filter element is obtained based on compressed blocks respectively corresponding to the one or more image blocks. The compressed anti-counterfeiting mark image of the filter element is to be processed to obtain the processing result of the anti-counterfeiting mark image.

In an implementation, after the one or more image blocks are obtained, one image block may be inputted to the processor each time, and the image block is compressed by the processor to obtain a compressed block corresponding to the image block. At this time, the processor may perform the step of obtaining the image block from the image capture device and the step of compressing the image block in parallel. In another implementation, the image block may also be transmitted to another compression device and is compressed by the another compression device to obtain the compressed block corresponding to the image block. Moreover, the compressed block corresponding to the image block is transmitted to the processor of the water purification device.

The compressing the image block comprises: performing binarization on the image block to obtain a data block; and compressing the data block to obtain the compressed block corresponding to the data block. In some embodiments, the binarization processing may be performed on the image block according to an existing binarization method to obtain the data block. The data in the data block varies according to different RGB data formats. For example, in response to the RGB data format being RGB24, each data in the binarized data block may be 0 or 255. For another example, in response to the RGB data format being RGB16, each data in the binarized data block may be a pixel extreme value of a corresponding channel. The pixel extreme value of the R channel is 0 or 255/8, the pixel extreme value of the G channel is 0 or 255/4, and the pixel extreme value of the B channel is 0 or 255/8.

In another implementation, the binarization threshold may also be determined based on the color space of the anti-counterfeiting mark image; and each pixel in the image block is binarized based on the binarization threshold to obtain the data block. In some embodiments, the binarization threshold comprises sub-thresholds corresponding to respective channels. It can be understood that the sub-thresholds corresponding to the respective channels may be the same or different. The sub-threshold may comprise an upper limit value or a lower limit value. In an implementation, the anti-counterfeiting mark image is a three-channel image, comprising R channel, G channel, and B channel. Depending on the different RGB data formats, the pixel extreme value of each channel in the RGB color space are obtained. The binarization threshold is determined based on the pixel extreme value and a predetermined error. An upper limit and a lower limit of each channel are determined according to the pixel extreme value and the predetermined error of each channel. For example, a difference between the pixel extreme value and the predetermined error of each channel is taken as the upper limit of the channel. When the pixel is white and the RGB data format is RGB16, the pixel has the R channel with a pixel extreme value of 255/8, the G channel with a pixel extreme value of 255/4, and the B channel with a pixel extreme value of 255/8. It is assumed that a predetermined error of the R channel and the G channel is 5, and a predetermined error of the B channel is 10, the upper limit of the R channel is 255/8-5, the upper limit of the G channel is 255/4-10, and the upper limit of the B channel is 255/8-5. The difference between the pixel extreme value and the predetermined error of each channel is taken as the upper limit of the channel. When the pixel is black and the RGB data format is RGB16, the pixel extreme values of the R, G, and B channels of the pixel are 0. It is assumed that the predetermined errors for the R, G, and B channels are each 5, the lower limits of the R, G, and B channels are each 10. It can be understood that the predetermined error may be set by the user as needed. The pixel extreme value of each channel vary with colors. In the above manner, black and white are taken as examples. In other implementations, the above manner may be used to determine the sub-thresholds corresponding to each channel for other colors.

Further, for each pixel in the image block, the pixel is binarized into a first value or a second value based on the relationship between the pixel value of the pixel in each channel and the sub-threshold of the channel. In some embodiments, it is determined whether the pixel value of each pixel in each channel is greater than the upper limit of the channel. For example, it is determined whether the pixel value of the pixel in the R channel is greater than 255/8-5, whether the pixel value of the pixel in the G channel is greater than 255/4-10, and whether the pixel value of the pixel in the B channel is greater than 255/8-5. In response to the pixel value of the pixel in each channel being greater than the corresponding upper limit value, the pixel is binarized into the first value. Alternatively, it is determined whether the pixel value of each pixel in each channel is smaller than the lower limit value of the channel. For example, it is determined whether the pixel value of the pixel in the R channel is smaller than 10, whether the pixel value of the pixel in the G channel is smaller than 10, and whether the pixel value of the pixel in the B channel is smaller than 10. In response to the pixel value of the pixel in each channel being smaller than the corresponding lower limit value, the pixel is binarized into the second value. The first value may be 0, representing white. The second value may be 1, representing black. It can be understood that in other implementations, the first value and the second value are interchangeable or set to other values, which is not specifically limited here.

Through the above manner, the image block may be processed to obtain a data block composed of 0 and 1. Compared with the image block, a data volume occupied by the data block is reduced, which can realize compression of the image block.

Although the data volume of the data block obtained through the above processing is smaller than the data volume of the image block, the data volume may still be relatively large. In an implementation, the data block may also be compressed to obtain the compressed block corresponding to the data block. In some embodiments, the data block may be divided into a plurality of sub-data blocks. For each sub-data block, elements in the sub-data block are weighted and averaged to obtain compressed data corresponding to the sub-data block. The compressed block is obtained using compressed data corresponding to the plurality of sub-data blocks. A weight for weighting each element may be set by the user. For example, the weight is set to 1.

For ease of understanding, in an example, the data block is a 4*4 matrix. The data block may be divided into two 2*2 sub-matrices. Each element in the sub-matrix is multiplied by a corresponding weight, such as a weight of 1. Then, the results obtained by multiplying the four elements by their respective weights are averaged to obtain the compressed data corresponding to the sub-matrix. Compressed data corresponding to the two sub-matrices is spliced to obtain the compressed block corresponding to the data block. At this time, the compressed block is a 1*2 matrix. For example, an 8*8 data block may be divided into 16 2*2 sub-data blocks.

It can be understood that the user may set a weight matrix. The number of elements contained in the weight matrix is equal to the number of sub-data blocks. For example, in response to the weight matrix containing 4 elements, the data block is divided into 4 sub-data blocks, and the numbers of elements in respective sub-data blocks may be the same or different. Each element in the weight matrix is the weight of each element in the sub-data block. That is, for one sub-data block, weights for weighting its elements are the same. For different sub-data blocks, weights for weighting their elements may be the same or different. In a specific implementation, the weight matrix may be an all-1 matrix.

Through the above manner, the data volume of the compressed block obtained by compressing the data block is significantly reduced.

After receiving each compressed block, the processor of the water purification device combines the compressed blocks sequentially to obtain a compressed image corresponding to the anti-counterfeiting mark image. At this time, compared with the anti-counterfeiting mark image of the filter element, the data volume of the compressed image is significantly reduced, allowing the processor to process and analyze the compressed image.

At step S54, the processing result of the anti-counterfeiting mark image is obtained.

At step S55, the product authenticity information of the filter element is determined based on the processing result.

In this implementation, the compressed anti-counterfeiting mark image of the filter element may be processed to obtain a processing result. The processing result may comprise an identification result obtained by identifying the compressed anti-counterfeiting mark image of the filter element, or a comparison result obtained by comparing the compressed anti-counterfeiting mark image of the filter element with a compressed template mark image.

For the implementations of steps S54 and S55, reference can be made to above steps S11 and S12, and details are omitted herein.

The anti-counterfeiting mark image is compressed to obtain a compressed anti-counterfeiting mark image, and a processor with low processing capacity is used to determine the authenticity of the filter element based on the compressed anti-counterfeiting mark image, which can reduce the cost in the process of identifying the authenticity of the filter element.

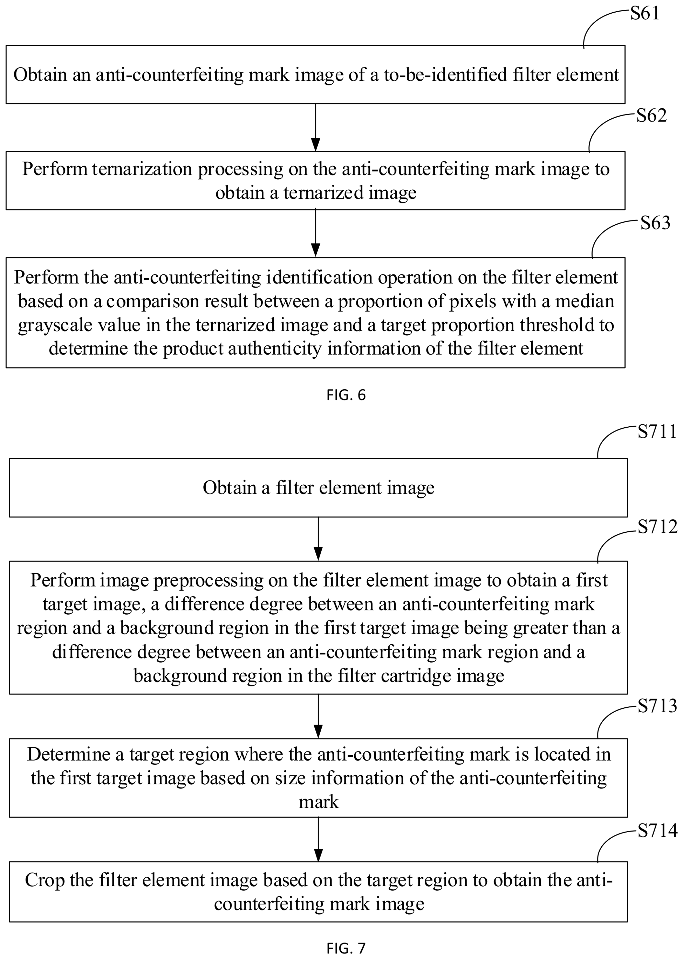

Referring to FIG. 6, FIG. 6 is a schematic flowchart of a sixth implementation of an anti-counterfeiting identification method for a filter element according to the present disclosure. The method comprises operations at steps S61 to S63.

At step S61, an anti-counterfeiting mark image of a to-be-identified filter element is obtained.

For the implementation of step S61, reference can be made to above step S11, and details are omitted herein. In this implementation, the anti-counterfeiting mark image may be a cropped image or a grayscale image.

At step S62, ternarization processing is performed on the anti-counterfeiting mark image to obtain a ternarized image.

It can be understood that when a lens surface of the image capture device is not fogged, the anti-counterfeiting mark image captured by the image capture device contains an anti-counterfeiting mark with clear boundaries. When the lens surface of the image capture device is fogged, the captured anti-counterfeiting mark image is relatively blurred. As an example, the anti-counterfeiting mark of the filter element is a two-dimensional code. If the lens surface of the image capture device is not fogged, the captured anti-counterfeiting mark image contains a two-dimensional code with clear boundaries, which can display all small squares with distinct black and white colors. If the lens surface of the image capture device is fogged, the captured anti-counterfeiting mark image is blurred, and can only display some of the small squares with distinct black and white colors. If the lens surface of the image capture device is severely fogged, the captured anti-counterfeiting mark image is extremely blurred and cannot display the small squares with distinct black and white colors.

In this step, a first pixel threshold and a second pixel threshold may be predetermined. The first pixel threshold is smaller than the second pixel threshold. The first pixel threshold and the second pixel threshold are used to perform the ternarization processing on the anti-counterfeiting mark image.

In this embodiment, a pixel value in the anti-counterfeiting mark image that is smaller than or equal to the first pixel threshold is set to a minimum grayscale value (such as 0), a pixel value that is between the first pixel threshold and the second pixel threshold is set to a median grayscale value (such as 1), and a pixel value that is greater than or equal to the second pixel threshold is set to a maximum grayscale value (such as 2).

As an example, the anti-counterfeiting mark of the filter element is a two-dimensional code. The ternarization processing is performed by dividing intervals based on the RGB data of the anti-counterfeiting mark image.

In actual execution, when the lens surface of the image capture device is in a normal state, RGB data of the black and white blocks in the captured anti-counterfeiting mark image fluctuates within a relatively small range. For example, the RGB data of the black block is smaller than 20, and the RGB data of the white block is greater than 240.

After the lens surface of the image capture device is fogged, the captured anti-counterfeiting mark image becomes blurred partially or entirely to varying degrees, resulting in a series of intermediate RGB data with values ranging from 20 to 240.

In this embodiment, the ternarization processing is performed on the anti-counterfeiting mark image. A grayscale value at a position of the black block with RGB data smaller than 20 is set to 0, a grayscale value at a position of the white block with RGB data greater than 240 is set to 2, and a grayscale value at a position of the intermediate RGB data is set to 1.

At step S63, the anti-counterfeiting identification operation is performed on the filter element based on a comparison result between a proportion of pixels with a median grayscale value in the ternarized image and a target proportion threshold to determine the product authenticity information of the filter element.

It should be noted that the number of pixels in the image captured by the image capture device is fixed. For example, the anti-counterfeiting mark image contains 64x64 pixels. It is determined whether the lens surface of the image capture device is blurred based on the proportion of pixels with the median grayscale value in the ternarized image, i.e., the proportion of the pixels with the median grayscale value to the total number of pixels in the ternarized image.

In actual execution, the target proportion threshold may be predetermined based on actual test data. When the proportion of pixels with the median grayscale value is greater than the target proportion threshold, the anti-counterfeiting mark image is blurred, indicating that the lens surface of the image capture device is fogged.

For example, the target proportion threshold is 40%, when the proportion of pixels with the median grayscale value in the ternarized image is greater than 40%, it is indicated that the lens surface of the image capture device is fogged.

In this embodiment, after it is determined that the lens surface of the image capture device is fogged, a corresponding anti-counterfeiting identification operation is performed on the filter element to further determine the authenticity of the filter element.

In actual execution, fogging occurs relatively infrequently inside the water purification device, and there is no high requirement for the timeliness of the filter element authenticity identification. The anti-counterfeiting mark image may be captured by a low-cost image capture device. After it is determined that the lens is fogged, the corresponding anti-counterfeiting identification operation is performed to satisfy the filter element anti-counterfeiting identification requirements without the need to use a lens provided with an anti-fog material.

It should be noted that for some counterfeit filter elements that lack surface marks or have no marks, the ternarization processing is performed on the anti-counterfeiting mark image, and it is determined whether the lens is fogged based on the determination of whether the proportion of pixels with the median grayscale value is greater than the target proportion threshold, which can accurately distinguish between the counterfeit scenario and the fogging scenario. An image of the counterfeit filter element has no pixel corresponding to the median grayscale value.

With the anti-counterfeiting identification method for the filter element according to the embodiments of the present disclosure, ternarization processing is performed on the anti-counterfeiting mark image, and the fogging situation is accurately identified according to the proportion of pixels with the median grayscale value in the ternarizaed image. The corresponding anti-counterfeiting identification operation is executed without the need to improve the lens, which is beneficial to reducing the cost of filter element anti-counterfeiting identification.

In actual execution, after it is determined that the lens of the image capture device is fogged according to the proportion of pixels with the median grayscale value in the ternarized image, at least the following two anti-counterfeiting identification operations may be used to determine the product authenticity information of the filter element.

In a first operation, no authenticity determination is performed currently, and a plurality of detections are performed subsequently.

In some embodiments, in response to the proportion of pixels with the median grayscale value in the ternarized image being greater than the target proportion threshold, the anti-counterfeiting identification operation is performed on the filter element to determine the product authenticity information of the filter element. Performing the anti-counterfeiting identification operation on the filter element to determine the product authenticity information of the filter element may comprise: re-obtaining a plurality of anti-counterfeiting mark images at a first time interval; respectively performing the ternarization processing on the plurality of anti-counterfeiting mark images to obtain a plurality of new ternarized images; and in response to the plurality of new ternarized images comprising at least one target ternarized image, determining the product authenticity information based on an anti-counterfeiting mark image corresponding to the target ternarized image. The proportion of pixels with the median grayscale value in the target ternarized image is smaller than or equal to the target proportion threshold.

In this embodiment, it is determined that the lens of the image capture device is fogged according to the image currently obtained by performing the ternarization processing on the anti-counterfeiting mark image, and no determination on the authenticity of the filter element is made currently.

It can be understood that lens fogging changes with the environment. If the lens is fogged currently, the lens fogging may disappear after a period of time.

In the subsequent process, the plurality of anti-counterfeiting mark images are continuously obtained at the first time interval and subjected to the ternarization processing. As long as it is determined that the lens is no longer fogged from at least one of the plurality of new ternarized images, i.e., the target ternarized image, the anti-counterfeiting mark image corresponding to the target ternarized image is used for anti-counterfeiting identification to determine the authenticity of the filter element. For example, the first time interval is 6 hours.

When the lens of the image capture device is fogged, no determination on the authenticity of the filter element is made currently. Subsequently, one anti-counterfeiting mark image is obtained every 6 hours continuously, to obtain a total of 20 anti-counterfeiting mark images. The ternarization processing is performed on the 20 anti-counterfeiting mark images. When at least one of the new 20 ternarized images has the proportion of pixels with the median grayscale value smaller than or equal to the target proportion threshold, the anti-counterfeiting identification may be performed according to the corresponding anti-counterfeiting mark image.

The determining the product authenticity information based on the anti-counterfeiting mark image corresponding to the target ternarized image may comprise: identifying the anti-counterfeiting mark image corresponding to the target ternarized image to obtain an identification result, or comparing the anti-counterfeiting mark image corresponding to the target ternarized image with a template mark image to obtain a comparison result, and determining the product authenticity information based on the identification result or the comparison result.

In some embodiments, the anti-counterfeiting identification method for the filter element may further comprise, subsequent to the determining the product authenticity information based on the anti-counterfeiting mark image corresponding to the target ternarized image: re-obtaining an anti-counterfeiting mark image at a second time interval to perform anti-counterfeiting identification on the filter element 300. The second time interval is greater than the first time interval.

In this embodiment, after the anti-counterfeiting identification is performed according to the anti-counterfeiting mark image corresponding to the target ternarized image, a frequency of performing the anti-counterfeiting identification operation may be reduced. For example, the first time interval is 6 hours, and the second time interval is 24 hours.

It can be understood that by regularly obtaining the anti-counterfeiting mark image at the predetermined second time interval, not only can the authenticity of the filter element 300 be checked in real time, but also a lens fogging situation of the image capture device and a moisture regain situation or water leakage situation inside the water purification device can be determined according to the ternarized image corresponding to the anti-counterfeiting mark image.

In a second operation, no authenticity determination is made locally, and the authenticity determination is made in the cloud.

In some embodiments, the performing the anti-counterfeiting identification operation on the filter element to determine the product authenticity information of the filter element may comprise: transmitting the anti-counterfeiting mark image to a server; and receiving the product authenticity information transmitted by the server.

In this embodiment, in response to the determination that the lens of the image capture device is fogged, the water purification device or other terminals do not determine the authenticity of the current filter element, but transmit the current anti-counterfeiting mark image to a cloud server. By leveraging a powerful computing capability of the server, blurred data is restored and analyzed, to determine the authenticity of the filter element.

It should be noted that the above anti-counterfeiting identification operation of performing the plurality of subsequent detections or performing the authenticity determination by the cloud is only applied when the lens of the image capture device is determined to be fogged based on the ternarized image corresponding to the anti-counterfeiting mark image. For a clearly captured anti-counterfeiting mark image, the authenticity of the filter element may be directly determined.

In some embodiments, the performing the anti-counterfeiting identification operation on the filter element based on the comparison result between the proportion of pixels with the median grayscale value in the ternarized image and the target proportion threshold, to determine the product authenticity information of the filter element comprises: in response to the proportion of pixels with the median grayscale value in the ternarized image being smaller than or equal to the target proportion threshold, determining the product authenticity information based on the anti-counterfeiting mark image.

In this embodiment, the proportion of pixels with the median grayscale value in the ternarized image being smaller than or equal to the target proportion threshold indicates that the lens of the image capture device is not fogged, and the anti-counterfeiting identification can be performed directly using the current anti-counterfeiting mark image to determine the product authenticity information.

In some embodiments, the anti-counterfeiting mark image is a color image. After obtaining the anti-counterfeiting mark image of the to-be-identified filter element 300 and before performing the ternarization processing on the anti-counterfeiting mark image, the anti-counterfeiting identification method for the filter element further comprises: converting the anti-counterfeiting mark image into a grayscale image.

It can be understood that a color image, also known as an RGB image, has color components in three channels R, G, and B. By converting the color anti-counterfeiting mark image into the grayscale image only having the color component in a single-channel, a processing speed of performing the ternarization processing on the anti-counterfeiting mark image can be effectively improved.

In an implementation, the anti-counterfeiting mark image is initially captured to obtain RGB data of the image, and the ternarization processing is performed on the RGB data. A grayscale value at a position of a black block with RGB data smaller than 20 is set to 0, a grayscale value at a position of a white block with RGB data greater than 240 is set to 2, and a grayscale value at a position with intermediate RGB data is set to 1. A proportion of value 1 in the overall data is calculated, i.e., the proportion of pixels with the median grayscale value in the ternarized image to the total number of pixels is calculated. When the proportion of value 1 is >40%, it is determined that the lens of the image capture device 400 is fogged or abnormal, and the anti-counterfeiting identification operations for abnormality comprising performing the plurality of subsequent detections or performing the authenticity determination by the cloud are performed. When the proportion of value 1 is ≤40%, it is determined that the lens of the image capture device 400 is normal, and normal identification is performed to obtain the determination result, after which the system waits for the next trigger to capture the image. In this embodiment, by performing the ternarization processing on the anti-counterfeiting mark image, the fogging scenario may be accurately identified based on the proportion of pixels with the median grayscale value in the ternarized image and a corresponding anti-counterfeiting identification operation may be executed, without the need to modify the lens, which is beneficial to reducing the cost of anti-counterfeiting identification for the filter element.

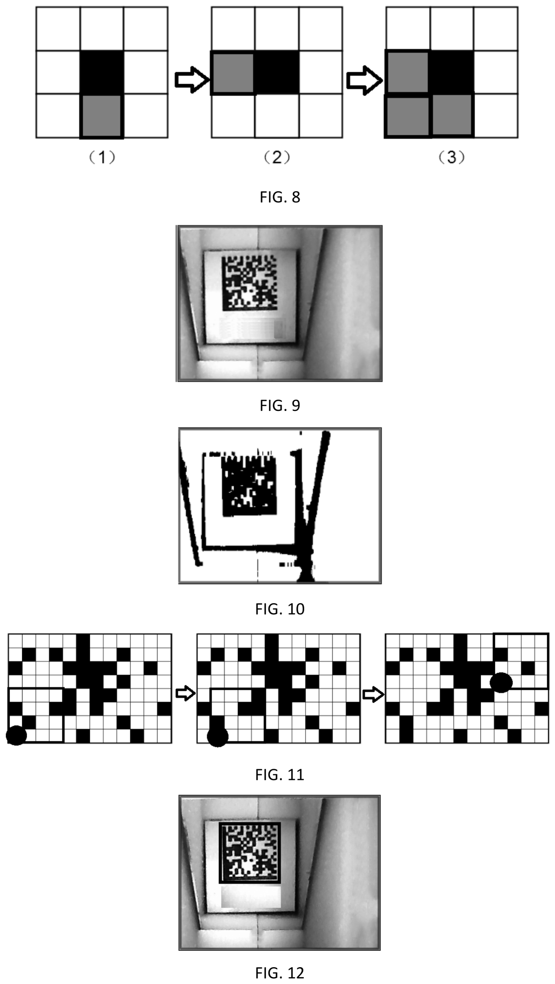

Referring to FIG. 7 to FIG.12, FIG. 7 is a schematic flowchart of an implementation of step S11 according the present disclosure, FIG. 8 is a schematic diagram of an implementation of filling a target binarized image with a solid-color pixel according to the present disclosure, FIG. 9 is a schematic diagram of an implementation of a filter element image according to the present disclosure, FIG. 10 is a schematic diagram of an implementation of a first target image according to the present disclosure, FIG. 11 is a schematic diagram of an implementation of counting a target pixel in a first target image according to the present disclosure, and FIG. 12 is a schematic diagram of an implementation of a position of a target region according to the present disclosure. Step S11 may comprise operations at steps S711 to S714.

At step S711, a filter element image is obtained.

The filter element image may be captured by an image capture device. For a case where only the anti-counterfeiting mark in the filter element image has a clear boundary, a black edge detection method may be used to determine the target region where the anti-counterfeiting mark is located, or data in a central part of the image may be directly cropped. However, in practical scenarios, black edge detection cannot accurately identify the target region where the anti-counterfeiting mark is located due to numerous interference factors in the filter element image, or valid image data of the anti-counterfeiting mark cannot be obtained by cropping the data in the central part of the image due to an offset capture angle.

At step S712, image preprocessing is performed on the filter element image to obtain a first target image. A difference degree between the anti-counterfeiting mark region and the background region in the first target image is greater than a difference degree between the anti-counterfeiting mark region and the background region in the filter element image.

In this step, through the image preprocessing, the difference degree between the anti-counterfeiting mark region and the background region in the filter element image is increased, to obtain the first target image. The anti-counterfeiting mark region in the first target image is easier to identify.

It should be noted that the difference degree between the anti-counterfeiting mark region and the background region in the image refers to a degree of difference between an image feature of the anti-counterfeiting mark region and an image feature of the background region. Image processing such as pixel expansion, contrast adjustment, and binarization may be used to increase the difference degree between the anti-counterfeiting mark region and the background region in the filter element image, which is beneficial to accurate positioning of the anti-counterfeiting mark region in the image.

In an implementation, the performing the image preprocessing on the filter element image comprises: performing binarization processing on the filter element image to obtain a target binary image; and for each pixel in the target binary image, performing expansion filling on a pixel adjacent to the pixel in the target binary image using a solid-color pixel based on a pixel value of the pixel in the target binary image, to obtain the first target image.

In this embodiment, the image preprocessing of the filter element image comprises binarization processing and pixel expansion filling. Through the binarization processing and the pixel expansion filling, the difference degree between the anti-counterfeiting mark region and the background region in the filter element image is effectively increased, to obtain the first target image.

In actual execution, the binarization processing is performed on the filter element image according to a predetermined binarization threshold to initially separate the anti-counterfeiting mark region from the background region, to obtain the target binary image.

Based on the pixel value of each pixel in the target binary image, solid-color pixel filling is performed on adjacent pixels to highlight a boundary between the anti-counterfeiting mark region and the background region, increasing the difference degree between the anti-counterfeiting mark region and the background region in the filter element image.

For example, as shown in FIG. 8, the pixel of the target binary image is expanded. Pixel values of adjacent pixels of a pixel in the target binary image are read one by one in downward, leftward, and diagonal directions. A threshold determination is then made to determine whether these adjacent pixels are black dots. In response to these adjacent pixels being black dots, black pixels are used for filling, until the expansion processing of the entire target binary image is completed.

For the filter element image shown in FIG. 9, image preprocessing comprising binarization processing and pixel expansion filling is performed, to obtain the first target image shown in FIG. 10. The difference degree between the anti-counterfeiting mark region and the background region in the first target image is more obvious.

In some embodiments, an expansion filling direction of the solid-color pixel is determined based on a distribution characteristic of the background region in the target binary image. It can be understood that the background region refers to an interfering print that affects the identification and positioning of the anti-counterfeiting mark region. By determining the expansion filling direction of the solid-color pixel based on the distribution characteristic of the background region, the difference degree between the anti-counterfeiting mark region and the background region is effectively increased. For example, as shown in FIG. 9, an interference factor in the background region is a large number of vertical stripes. By performing expansion filing in the expansion filling direction of black pixels shown in FIG. 8, the first target image with an increased difference degree between the anti-counterfeiting mark region and the background region may be obtained.

At step S713, the target region where the anti-counterfeiting mark is located in the first target image is determined based on the size information of the anti-counterfeiting mark.

In this step, according to the size information of the anti-counterfeiting mark, the target region where the anti-counterfeiting mark is located is positioned in the first target image where the difference between the anti-counterfeiting mark region and the background region is obvious. For example, the anti-counterfeiting mark is a square two-dimensional code of 90×90 pixels, and a target region where an anti-counterfeiting mark is located that matches the 90×90-pixel square is searched for in the first target image.

In an implementation, by using the pixel in the first target image as a reference point, all pixels in the first target image are traversed sequentially, and a count value of target pixels in the region corresponding to the size information in the first target image is obtained. A pixel value of the target pixel is greater than a target pixel threshold.

The target region is determined based on the count value of target pixels.

In this embodiment, according to the size information of the anti-counterfeiting mark, all pixels of the first target image may be traversed sequentially starting from a pixel at a lower-left corner of the first target image. With each pixel as the reference point, the count value of target pixels in the region corresponding to the size information is calculated.

For example, the target pixels are black pixels, and the anti-counterfeiting mark is a 90×90-pixel square. As shown in FIG. 11, starting from the pixel at the lower-left corner, the count value of black pixels in the 90×90-pixel image is calculated. Then, the reference point is shifted right by one pixel, and the count value of black pixels in the 90x90-pixel image continues to be calculated, until all pixels of the first target image are traversed.

In some embodiments, a region in the first target image with the maximum count value of target pixels is determined as the target region.

In this embodiment, after the count value of target pixels in each region corresponding to the size information in the first target image is obtained, the region with the maximum count value is used as the target region. As shown in FIG. 12, the filter element image may be cropped according to the target region (a black border next to the two-dimensional code) to obtain the anti-counterfeiting mark image for anti-counterfeiting identification.

In some embodiments, the method may further comprise, subsequent to the obtaining the count value of target pixels in the region corresponding to the size information in the first target image: in response to the presence a plurality of regions in the first target image where the count value of target pixels is greater than the target count threshold, at least one of the filter element image and the first target image is transmitted to the server for the server to perform anti-counterfeiting identification on the filter element.

The target count threshold may be a critical count value determined based on the proportion of target pixels in the anti-counterfeiting mark. The count value of target pixels in a certain region of the first target image being greater than the target count threshold indicates that this region may be the region where the anti-counterfeiting mark is located.

In this embodiment, there are a plurality of regions in the first target image where the count value of target pixels is greater than the target count threshold, making it impossible to accurately locate an exact position of the target region. The filter element image and/or the first target image may be transmitted to a server. The powerful computing capability of the server is used for anti-counterfeiting identification, improving identification accuracy.

At step S714, the filter element image is cropped based on the target region to obtain an anti-counterfeiting mark image.

The anti-counterfeiting mark image is used to determine the product authenticity information of the filter element.

In this embodiment, the first target image is cropped according to the target region where the anti-counterfeiting mark is located, to obtain the anti-counterfeiting mark image corresponding to the target region where the anti-counterfeiting mark is located. The size of the cropped image is significantly reduced, enabling anti-counterfeiting identification of the filter element with a low-cost processor.

Through the above implementations, the difference degree between the anti-counterfeiting mark region and the background region in the filter element image is increased by performing the image preprocessing on the filter element image, which is beneficial to accurate positioning of the anti-counterfeiting mark region in the image. By cropping the image based on the located target region and performing the anti-counterfeiting identification, low-cost anti-counterfeiting identification of the filter element can be achieved.

In an implementation, the image capture device captures a to-be-processed image. The image may be stored in an on-chip Flash of the micro-processing unit, and then read from the on-chip Flash for image preprocessing. A threshold is selected for binarization processing, the binarization processing is performed on the to-be-processed image, and image preprocessing involving black pixel expansion is performed. The pixel is determined as black through threshold determination. An adjacent pixel below is filled with black. This process continues with reading the next pixel until all filling is completed. After the image preprocessing is completed, the number of black pixels in the region corresponding to the size information of the anti-counterfeiting mark in the first target image is counted. The first pixel is selected as the coordinate origin, and square image data with a set width starting from the coordinate origin is read to calculate the number of black pixels. The coordinate point is then moved to the next pixel, until all square pixel statistics are completed. The region with the maximum count of black pixels is determined as the target region where the anti-counterfeiting mark is located.

In this embodiment, by performing the image preprocessing on the to-be-processed image, the difference degree between the anti-counterfeiting mark region and the background region is increased, enabling the accurate positioning of the anti-counterfeiting mark region. By cropping the image based on the located target region, low-cost anti-counterfeiting identification of the filter element can be realized.

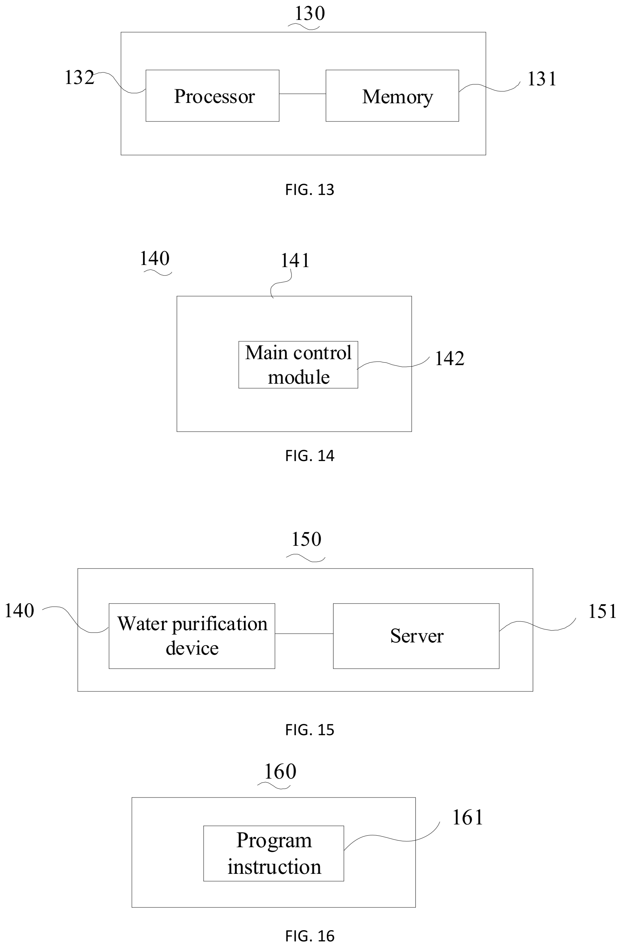

Referring to FIG. 13, FIG. 13 is a schematic diagram of an implementation of a framework structure of an electronic device according to the present disclosure.

The electronic device 130 may be a water purification device, a main control module within a water purification device, or a server. The electronic device 130 may execute any of the above methods. In some embodiments, the electronic device may comprise a memory 131 and a processor 132. The memory 131 stores program instructions. The processor 132 is configured to execute the program instructions stored in the memory to implement any of the above methods. In a specific implementation, the processor 132 may comprise a memory space and a storage space. The storage space is configured to store the compressed image. The memory space is configured to execute the program instructions stored in the memory 131 to implement any of the above methods.

The processor 132 may also be referred to as a CPU (Central Processing Unit). The processor 132 may be an integrated circuit chip with signal processing capabilities. The processor 132 may also be a general-purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The general-purpose processor may be a microprocessor or may be any conventional processor. In addition, the processor 132 may be implemented collectively by integrated circuit chips.

Referring to FIG. 14, FIG. 14 is a schematic diagram of an implementation of a framework structure of a water purification device according to the present disclosure.

The water purification device 140 may comprise a device body 141 and a main control module 142 integrated into the device body 141. The main control module 142 may be the electronic device as described above. The water purification device 140 is further mounted with a filter element, and the filter element may be mounted on the device body 141. In an implementation, after the filter element is mounted in the water purification device, the filter element is located at a focal length of the image capture device, and the image capture device is configured to capture an image of the filter element.

In another implementation, the water purification device 140 further comprises an image capture device that may be in a communication connection with the main control module 142. The image capture device is configured to capture a filter element image that comprises an anti-counterfeiting mark image. The image capture device may also be a camera component. In some embodiments, the image capture device may comprise a plurality of image capture units. The plurality of image capture units are arranged in one-to-one correspondence with a plurality of filter elements of the water purification device 140 and configured to monitor the plurality of filter elements in the water purification device 140.

Referring to FIG. 15, FIG. 15 is a schematic diagram of an implementation of a framework structure of a filter element anti-counterfeiting system according to the present disclosure.

The filter element anti-counterfeiting system 150 comprises a water purification device 140 and a server 151 in a communication connection with the water purification device 140. The water purification device 140 and the server 151 are respectively configured to execute the relevant steps in the method implementations according to the present disclosure.

Referring to FIG. 16, FIG. 16 is a schematic diagram of an implementation of a framework structure of a computer-readable storage medium according to the present disclosure.

The computer-readable storage medium 160 stores program instructions 161. The program instructions 161 are configured to, when executed by a processor, implement the steps in any of the above method embodiments.

The computer-readable storage medium 160 may be a USB flash drive, a mobile hard disk, a Read-Only Memory (ROM), a Random Access Memory (RAM), a magnetic disk, an optical disc, or other media capable of storing computer programs. Alternatively, the computer-readable storage medium 160 may be a server storing the computer program, and may transmit the stored computer program to other devices for execution or execute the stored computer program itself.

If the technical solution of the present disclosure involves personal information, the product applying the technical solution of the present disclosure shall clearly inform the individual of the personal information processing rules and obtain the individual's voluntary consent before processing the personal information. If the technical solution of the present disclosure involves sensitive personal information, the product applying the technical solution of the present disclosure shall obtain the individual's separate consent before processing the sensitive personal information, and simultaneously meet the requirement of "express consent". For example, at a personal information collection device, such as a camera, a clear and prominent mark is set to inform that the individual has entered the personal information collection range and that personal information will be collected. If the individual voluntarily enters the collection range, it is deemed as consent to the collection of their personal information. Alternatively, on a device for personal information processing, with clear marks/information informing the personal information processing rules, personal authorization is obtained through pop-up information or requesting the individual to upload their personal information. The personal information processing rules may comprise information such as the personal information processor, the purpose of personal information processing, the processing method, and the type of personal information to be processed.

The above descriptions are only implementations of the present disclosure and do not limit the patent scope of the present disclosure. Any equivalent structure or equivalent process transformation made using the content of the description and drawings of the present disclosure, or directly or indirectly applied in other related technical fields, shall similarly be comprised in the patent protection scope of the present disclosure.

## Claims

1. An anti-counterfeiting identification method for a filter element, comprising:
obtaining an anti-counterfeiting mark image of a to-be-identified filter element; and
performing an anti-counterfeiting identification operation on the filter element based on the anti-counterfeiting mark image, to determine product authenticity information of the filter element.

2. The method according to claim 1, wherein the performing the anti-counterfeiting identification operation on the filter element based on the anti-counterfeiting mark image, to determine the product authenticity information of the filter element comprises:
obtaining a processing result of the anti-counterfeiting mark image; and
determining the product authenticity information of the filter element based on the processing result, wherein the processing result is an identification result obtained by identifying the anti-counterfeiting mark image or a comparison result obtained by comparing the anti-counterfeiting mark image with a template mark image.

3. The method according to claim 2, wherein the processing result is the identification result obtained by identifying the anti-counterfeiting mark image, and the identification result comprises ciphertext data of an anti-counterfeiting mark in the anti-counterfeiting mark image.

4. The method according to claim 3, wherein the determining the product authenticity information of the filter element based on the processing result comprises:
decrypting the ciphertext data to obtain plaintext data corresponding to the anti-counterfeiting mark;
determining whether the plaintext data conforms to a predetermined encoding rule, wherein the plaintext data is obtained by encoding production information of the filter element according to the predetermined encoding rule; and
determining that the filter element is genuine in response to the plaintext data conforming to the predetermined encoding rule.

5. The method according to claim 3 or 4, wherein the determining the product authenticity information of the filter element based on the processing result comprises:
transmitting the ciphertext data to a server, wherein the server is capable of decrypting the ciphertext data to obtain the plaintext data corresponding to the anti-counterfeiting mark and obtaining association information corresponding to the plaintext data, the association information indicating whether the filter element is associated with an other water purification device, and determining the product authenticity information of the filter element based on the association information.

6. The method according to any one of claims 2 to 5, wherein the method further comprises: obtaining an auxiliary identification mark corresponding to the to-be-identified filter element; and
prior to the obtaining the processing result of the anti-counterfeiting mark image, the method further comprises:
determining whether the auxiliary identification mark in a filter element image is the same as a target identification mark, wherein the filter element image comprises the auxiliary identification mark and an anti-counterfeiting mark; and
in response to the auxiliary identification mark being the same as the target identification mark, executing the step of obtaining the processing result of the anti-counterfeiting mark image.

7. The method according to any one of claims 2 to 6, further comprising, prior to the obtaining the processing result of the anti-counterfeiting mark image:
dividing the anti-counterfeiting mark image into one or more image blocks based on a random-access memory space of a processor in a water purification device; and
obtaining a compressed anti-counterfeiting mark image of the filter element based on compressed blocks respectively corresponding to the one or more image blocks, wherein the compressed anti-counterfeiting mark image of the filter element is to be processed to obtain the processing result of the anti-counterfeiting mark image.

8. The method according to claim 1, wherein the performing the anti-counterfeiting identification operation on the filter element based on the anti-counterfeiting mark image to determine the product authenticity information of the filter element comprises:
performing ternarization processing on the anti-counterfeiting mark image to obtain a ternarized image; and
performing the anti-counterfeiting identification operation on the filter element based on a comparison result between a proportion of pixels with a median grayscale value in the ternarized image and a target proportion threshold, to determine the product authenticity information of the filter element.

9. The method according to claim 8, wherein the performing the anti-counterfeiting identification operation on the filter element based on the comparison result between the proportion of pixels with the median grayscale value in the ternarized image and the target proportion threshold, to determine the product authenticity information of the filter element comprises:
in response to the proportion of pixels with the median grayscale value in the ternarized image being greater than the target proportion threshold, re-obtaining a plurality of anti-counterfeiting mark images at a first time interval;
respectively performing the ternarization processing on the plurality of anti-counterfeiting mark images to obtain a plurality of new ternarized images; and
in response to the plurality of new ternarized images comprising at least one target ternarized image, determining the product authenticity information based on an anti-counterfeiting mark image corresponding to the target ternarized image, wherein the proportion of pixels with the median grayscale value in the target ternarized image is smaller than or equal to the target proportion threshold.

10. The method according to claim 9, further comprising, subsequent to the determining the product authenticity information based on the anti-counterfeiting mark image corresponding to the target ternarized image:
re-obtaining the anti-counterfeiting mark image at a second time interval to perform anti-counterfeiting identification on the filter element, wherein the second time interval is greater than the first time interval.

11. The method according to any one of claims 8 to 10, wherein the performing the anti-counterfeiting identification operation on the filter element based on the comparison result between the proportion of pixels with the median grayscale value in the ternarized image and the target proportion threshold, to determine the product authenticity information of the filter element comprises:
in response to the proportion of pixels with the median grayscale value in the ternarized image being smaller than or equal to the target proportion threshold, determining the product authenticity information based on the anti-counterfeiting mark image.

12. The method according to any one of claims 1 to 11, wherein the obtaining the anti-counterfeiting mark image of the to-be-identified filter element comprises:
obtaining a filter element image, wherein the filter element image is obtained by photographing the to-be-identified filter element, the to-be-identified filter element comprising an anti-counterfeiting mark; and
cropping the anti-counterfeiting mark image from the filter element image.

13. The method according to claim 12, wherein the cropping the anti-counterfeiting mark image from the filter element image comprises:
determining cropping coordinates based on a relative position between an image capture device and the to-be-identified filter element in a water purification device, wherein the image capture device is capable of photographing the to-be-identified filter element to obtain the filter element image; and cropping image data from the filter element image based on the cropping coordinates to obtain the anti-counterfeiting mark image; or
obtaining a grayscale filter element image based on grayscale data of the filter element image; and cropping the anti-counterfeiting mark image from the grayscale filter element image; or
performing image preprocessing on the filter element image to obtain a first target image, a difference degree between an anti-counterfeiting mark region and a background region in the first target image being greater than a difference degree between an anti-counterfeiting mark region and a background region in the filter element image; determining a target region in which the anti-counterfeiting mark is located in the first target image based on size information of the anti-counterfeiting mark; and cropping the filter element image based on the target region to obtain the anti-counterfeiting mark image.

14. The method according to claim 13, wherein the anti-counterfeiting mark image is cropped from the grayscale filter element image; and
the cropping the anti-counterfeiting mark image from the grayscale filter element image comprises:
determining an anti-counterfeiting mark boundary in the grayscale filter element image based on a target grayscale threshold; and
cropping a second filter element image based on the anti-counterfeiting mark boundary and the size information of the anti-counterfeiting mark to obtain the anti-counterfeiting mark image.

15. The method according to any one of claims 12 to 14, wherein the performing the anti-counterfeiting identification operation on the filter element based on the anti-counterfeiting mark image, to determine the product authenticity information of the filter element comprises:
comparing the anti-counterfeiting mark image with a template mark image to determine the product authenticity information of the filter element.

16. The method according to claim 15, wherein the comparing the anti-counterfeiting mark image with the template mark image to determine the product authenticity information of the filter element comprises:
performing image segmentation processing based on grayscale information on the anti-counterfeiting mark image to obtain a first mark image;
performing binarization processing and rotation processing on the first mark image to obtain a binarized image;
performing image segmentation processing based on a mark size on the binarized image to obtain a plurality of first mark sub-images;
respectively performing translation processing on the plurality of first mark sub-images to obtain a plurality of second mark sub-images corresponding to a second mark image; and
comparing the second mark image with the template mark image to determine the product authenticity information.

17. An electronic device, comprising:
a memory storing program instructions; and
a processor configured to execute the program instructions stored in the memory to implement a method according to any one of claims 1 to 16.

18. A water purification device, comprising:
a device body; and
a main control module carried by the device body, wherein the main control module is configured to implement a method according to any one of claims 1 to 16, and
a to-be-identified filter element is mounted on the device body.

19. A filter element anti-counterfeiting system, comprising:
a water purification device; and
a server in a communication connection with the water purification device, the water purification device being configured to implement a method according to any one of claims 1 to 16.

20. A computer-readable storage medium, storing a program file, the program file being executable to implement a method according to any one of claims 1 to 16.
